# EUROPÄISCHE PATENTSCHRIFT

(11) **EP 3 055 175 B1**
(45) Veröffentlichungstag und Bekanntmachung des Hinweises auf die Patenterteilung: **02.01.2019**
(21) Anmeldenummer: 14783802.3
(22) Anmeldetag: 09.10.2014
(51) Int. Cl.: B60T 13/68, B60T 8/32

(54) **VERFAHREN ZUM STEUERN EINER DRUCKSTEUERVORRICHTUNG EINER DRUCKMITTEL-BREMSANLAGE EINES FAHRZEUGS**
METHOD FOR CONTROLLING A PRESSURE CONTROL DEVICE OF A PRESSURE-MEDIUM BRAKE SYSTEM OF A VEHICLE
PROCÉDÉ DE COMMANDE D'UN DISPOSITIF DE COMMANDE DE PRESSION D'UN SYSTÈME DE FREINAGE À FLUIDE SOUS PRESSION D'UN VÉHICULE AUTOMOBILE

(30) Priorität: 11.10.2013 DE 102013016877
(43) Veröffentlichungstag der Anmeldung: 17.08.2016
(73) Patentinhaber: KNORR-BREMSE Systeme für Nutzfahrzeuge GmbH, 80809 München (DE)
(72) Erfinder: WIEDER, Gerhard, 74354 Besigheim (DE); SCHÄFERS, Andreas, 71282 Hemmingen (DE); HOLOBRADI, Peter, H-2040 Budaörs (HU)
(86) Internationale Anmeldenummer: PCT/EP2014/071615
(87) Internationale Veröffentlichungsnummer: WO 2015/052271

(56) Entgegenhaltungen:
- DE-A1-102010 010 606
- US-A- 4 805 105

## Beschreibung

Die Erfindung betrifft ein Verfahren zum Steuern einer Drucksteuervorrichtung einer Druckmittel-Bremsanlage eines Fahrzeugs, gemäß dem Oberbegriff von Anspruch 1.

Ein solches Verfahren bzw. eine solche Drucksteuervorrichtung ist aus der DE 10 2010 010 606 A1 bekannt. Die bekannte Drucksteuervorrichtung ist so aufgebaut, dass sie ausgehend von einer Bremsschlupfregelung (ABS) als Basis lediglich durch Hinzufügen einzelner Komponenten hinsichtlich ihrer Regelungsfunktionen auf einfache Weise erweiterbar ist, beispielsweise hinsichtlich einer Erweiterung durch eine Antriebsschlupfregelung (ASR), eine Fahrdynamikregelung (ESP) oder durch ein elektronisches Bremssystem (EBS).

Die bekannte Drucksteuervorrichtung beinhaltet ein einziges Relaisventil, mit einem von einem Vorratsdruck versorgten Vorratsanschluss, einem mit einer Drucksenke in Verbindung stehenden Entlüftungsanschluss, einem Steueranschluss und mit wenigstens zwei Arbeitsanschlüssen, wobei der eine Arbeitsanschluss wenigstens einem Bremszylinder eines Rades einer Fahrzeugseite der Achse und der andere Arbeitsanschluss des einzigen Relaisventils wenigstens einem Bremszylinder eines Rades der anderen Fahrzeugseite der Achse zugeordnet ist, wobei jeder Arbeitsanschluss des Relaisventils mit einem von einem Steuergerät direkt oder indirekt gesteuerten und jeweils einer Fahrzeugseite zugeordneten 2/2-Wegeventil verbunden ist, welches abhängig von der Ansteuerung durch das Steuergerät entweder eine Verbindung zwischen dem betreffenden Arbeitsanschluss des Relaisventils und dem zugeordneten Bremszylinder herstellt oder diese Verbindung sperrt, und wobei der Steueranschluss des Relaisventils mittels einer durch ein 3/2-Wege-Magnetventil oder durch zwei 2/2-Wege-Magnetventile gebildeten und mittels des Steuergeräts gesteuerten Ventileinrichtung entweder mit einem fahrerbremswunschabhängig gebildeten Bremssteuerdruck oder mit einer Drucksenke verbindbar ist.

Somit umfasst die bekannte Drucksteuervorrichtung lediglich vier Grundelemente: Das einzige Relaisventil, die Ventileinrichtung, welche lediglich ein 3/2-Wege-Magnetventil oder zwei 2/2-Wege-Magnetventile umfasst sowie die beiden 2/2-Wegeventile. Mit diesen relativ einfach und kostengünstig herzustellenden Ventilen kann bereits eine radindividuelle Bremsschlupfregelung in einem gewissen Rahmen realisiert werden, d.h. beispielsweise ein Druckaufbau bzw. Druckabbau an einem Radbremszylinder einer Fahrzeugseite bei gleichzeitigem Druckhalten in einem Radbremszylinder der anderen Fahrzeugsseite. Ein gegenläufiger Druckverlauf (Druckabbau, Druckaufbau) an Rädern unterschiedlicher Fahrzeugseiten ist jedoch nicht möglich.

Insbesondere wird nur ein einziges Relaisventil verwendet, um eine radindividuelle Steuerung großer Druckmittelquerschnitte in den Bremszylindern unter anderem durch einen zentralen, relativ kleinen Steuerdruckstrom zu realisieren. Dadurch ist die Drucksteuervorrichtung insgesamt sehr kostengünstig herzustellen.

Bei der Steuerung der bekannten Drucksteuereinrichtung ergibt sich jedoch das Problem, dass aufgrund der relativ trägen Reaktion des Relaisventils auf durch seinen Steueranschluss eingeleitete pneumatische Drucksteuersignale hin beispielsweise weiterhin Druckluft in einen Bremszylinder strömt, obwohl an diesem bedingt beispielsweise bedingt durch eine radindividuelle Bremsschlupfregelung (ABS) bereits ein Druckabbau erfolgen soll. Dies ist besonders im Hinblick auf eine geforderte schnelle Druckanpassung der Bremsdrücke in den Bremszylindern im Rahmen einer Bremsschlupfregelung (ABS), einer Antriebsschlupfregelung (ASR) oder einer Fahrdynamikregelung (ESP) von Nachteil.

Der Erfindung liegt demzufolge die Aufgabe zugrunde, ein Verfahren zum Steuern einer eingangs genannten Drucksteuervorrichtung derart fortzubilden, dass es eine schnellere Anpassung der Bremszylinderdrücke erlaubt.

Diese Aufgabe wird erfindungsgemäß durch die Merkmale von Anspruch 1 gelöst.

### Offenbarung der Erfindung

Die Erfindung basiert auf dem Gedanken, dass
- für einen Druckabbau an wenigstens einem Bremszylinder die Ventileinrichtung in Druckabbaustellung geschaltet wird, und solange der Arbeitsdruck an dem dem wenigstens einen Bremszylinder zugeordneten Arbeitsanschluss des Relaisventils noch größer als der Druck in dem betreffenden Bremszylinder oder gleich diesem ist, das dem betreffenden Bremszylinder zugeordnete 2/2-Wegeventil in Sperrstellung geschaltet wird oder bleibt und erst wenn der Arbeitsdruck an dem betreffenden Arbeitsanschluss des Relaisventils kleiner als der Druck in dem betreffenden Bremszylinder ist, das dem betreffenden Bremszylinder zugeordnete 2/2-Wegeventil in Durchlassstellung geschaltet wird, und dass
- für einen Druckaufbau an wenigstens einem Bremszylinder die Ventileinrichtung in Druckaufbaustellung geschaltet wird, und solange der Arbeitsdruck an dem dem wenigstens einen Bremszylinder zugeordneten Arbeitsanschluss des Relaisventils noch kleiner als der Druck in dem betreffenden Bremszylinder oder gleich diesem ist, das dem betreffenden Bremszylinder zugeordnete 2/2-Wegeventil in Sperrstellung geschaltet wird oder bleibt und erst wenn der Arbeitsdruck an dem betreffenden Arbeitsanschluss des Relaisventils größer als der Druck in dem betreffenden Bremszylinder ist, das dem betreffenden Bremszylinder zugeordnete 2/2-Wegeventil in Durchlassstellung geschaltet wird.

Durch das erfindungsgemäße Verfahren wird das eingangs geschilderte Problem verhindert, dass aufgrund der relativ trägen Reaktion des Relaisventils auf durch seinen Steueranschluss eingeleitete pneumatische Drucksteuersignale hin beispielsweise weiterhin Druckluft in einen Bremszylinder strömt, obwohl an diesem bedingt beispielsweise durch eine radindividuelle Bremsschlupfregelung bereits ein Druckabbau erfolgen soll.

Denn bei der Erfindung findet vorzugsweise zu jedem Zeitpunkt oder in Zeiträumen, in denen eine Druckanpassung in wenigstens einem Bremszylinder stattfindet, ein Vergleich zwischen den an den Arbeitsanschlüssen des Relaisventils anstehenden Arbeitsdrücken mit den jeweils in den Bremszylindern vorliegenden Bremszylinderdrücken statt.

Ergibt dieser Vergleich, dass ein erlaubtes Druckgefälle zwischen dem Arbeitsdruck an dem betreffenden Arbeitsanschluss des Relaisventils und dem Bremszylinderdruck des betreffenden Bremszylinders vorliegt, beispielsweise im dem Fall eines Druckaufbaus an einem Bremszylinder, bei dem dann der Arbeitsdruck an dem betreffenden Arbeitsanschluss größer sein muss als der Bremszylinderdruck in dem betreffenden Bremszylinder, so wird das dem Bremszylinder zugeordnete 2/2-Wegeventil sofort in Durchlassstellung geschaltet.

Ergibt dieser Vergleich jedoch, dass kein erlaubtes Druckgefälle zwischen dem Arbeitsdruck an dem betreffenden Arbeitsanschluss des Relaisventils und dem Bremszylinderdruck des betreffenden Bremszylinders vorliegt und daher für den beispielhaften Fall des Druckaufbaus an einem Bremszylinder der Arbeitsdruck an dem betreffenden Arbeitsanschluss des Relaisventils noch kleiner als der Bremszylinderdruck in dem betreffenden Bremszylinder oder gleich diesem ist, so wird das dem Bremszylinder zugeordnete 2/2-Wegeventil erst nach Ablauf einer Sperrhaltezeit, welche trägheitsbedingt notwendig ist, damit der Arbeitsdruck am betreffenden Arbeitsanschluss des Relaisventils auf den gewünschten Solldruckwert ansteigen kann, von der Sperrstellung in Durchlassstellung geschaltet.

In analoger Weise geht das Verfahren bei einem Druckabbau vor, bei dem dann ein erlaubtes Druckgefälle zwischen dem Arbeitsdruck an dem betreffenden Arbeitsanschluss des Relaisventils und dem Bremszylinderdruck des betreffenden Bremszylinders dahingehend vorliegen muss, dass der Arbeitsdruck an dem betreffenden Arbeitsanschluss kleiner sein muss als der Bremszylinderdruck in dem betreffenden Bremszylinder. Ist dies der Fall, so wird das dem Bremszylinder zugeordnete 2/2-Wegeventil sofort in Durchlassstellung geschaltet.

Ergibt dieser Vergleich jedoch, dass kein erlaubtes Druckgefälle zwischen dem Arbeitsdruck an dem betreffenden Arbeitsanschluss des Relaisventils und dem Bremszylinderdruck des betreffenden Bremszylinders vorliegt und daher für den beispielhaften Fall des Druckabbaus an einem Bremszylinder der Arbeitsdruck an dem betreffenden Arbeitsanschluss des Relaisventils noch größer als der Bremszylinderdruck in dem betreffenden Bremszylinder oder gleich diesem ist, so wird das dem Bremszylinder zugeordnete 2/2-Wegeventil erst nach Ablauf einer Sperrhaltezeit, welche trägheitsbedingt notwendig ist, damit der Arbeitsdruck am betreffenden Arbeitsanschluss des Relaisventils auf den gewünschten Solldruckwert abfallen kann, von der Sperrstellung in Durchlassstellung geschaltet.

Das erfindungsgemäße Verfahren wird sowohl für einen radindividuellen Druckaufbau bzw. für einen radindividuellen Druckabbau als auch für einen Druckaufbau bzw. Druckabbau in den Bremszylindern beider Räder der Achse eingesetzt.

Durch die in den Unteransprüchen aufgeführten Maßnahmen sind vorteilhafte Weiterbildungen und Verbesserungen der in Anspruch 1 angegebenen Erfindung möglich.

Bevorzugt werden der Druck in dem betreffenden Bremszylinder und/oder der Arbeitsdruck an dem betreffenden Arbeitsanschluss des Relaisventils mittels eines Drucksensors gemessen oder mittels eines Schätzalgorithmus geschätzt.

Bevorzugt wird auch ein Druckaufbau oder ein Druckabbau an dem ersten Bremszylinder erst vollständig abgeschlossen, bevor mit einem Druckaufbau oder einem Druckabbau an dem zweiten Bremszylinder begonnen wird und umgekehrt.

Gemäß einer Weiterbildung wird die Ventileinrichtung zum Druckaufbau oder zum Druckabbau pulsweitenmoduliert angesteuert. Dadurch ergibt sich ein schnelles Umschalten der Ventileinrichtung zwischen der Belüftungsstellung und der Entlüftungsstellung, wodurch ein Schwebedruck in der mit dem Steueranschluss verbundenen Steuerkammer des Relaisventils entsteht, was die Reaktionszeit des Relaisventils verbessert.

Gemäß einer bevorzugten Weiterbildung wird die Ventileinrichtung gemäß einer Ausgangsstellung in die Druckabbaustellung oder in die Druckaufbaustellung angesteuert. Der Hintergrund dieser Maßnahme liegt darin, dass beispielsweise bei einem unerwünschten Blockieren eines Rades im Rahmen einer Bremsschlupfregelung (ABS), Antriebsschlupfregelung (ASR) oder Fahrdynamikregelung (ESP) der Bremsdruck in dem betreffenden Bremszylinder oder in den betreffenden Bremszylindern sehr schnell abgebaut werden muss und dabei eine sich bereits in der Druckabbaustellung befindliche Ventileinrichtung von Vorteil ist, weil diese dann nicht mehr umgeschaltet werden muss. Die Ausgangsstellung der Ventileinrichtung ist daher priorisiert die Druckabbaustellung. Andererseits kann die Ausgangsstellung der Ventileinrichtung auch priorisiert durch die Druckaufbaustellung gebildet werden, für den Fall, dass ein gewünschter Druckaufbau vorhersehbar ist.

Generell kann der Druckaufbau oder der Druckabbau an wenigstens einem der Bremszylinder bedingt durch eine radindividuelle Bremsschlupfregelung (ABS), eine radindividuelle Antriebsschlupfregelung (ASR), durch eine radindividuelle Fahrdynamikregelung (ESP) oder durch eine beliebige andere Steuerung oder Regelung erfolgen.

Bevorzugt werden als 2/2-Wegeventile Membranventile oder Boosterventile herangezogen, welche durch jeweils ein vom Steuergerät elektrisch gesteuertes und derselben Fahrzeugseite zugeordnetes 3/2-Wege-Vorsteuer-Magnetventil pneumatisch vorgesteuert werden. Dadurch können große Druckmittelströme mit geringen Steuerdruckmittelströmen relativ schnell in die Bremszylinder eingesteuert werden.

Dabei sind die 3/2-Wege-Vorsteuer-Magnetventile bevorzugt ausgebildet, dass sie abhängig von einer Steuerung durch das Steuergerät einerseits einen Vorratsdruck eines Druckreservoirs oder den fahrerbremswunschabhängigen gebildeten Steuerdruck an einen Steueranschluss des zugeordneten 2/2-Wegeventils durchsteuern oder andererseits diesen Steueranschluss mit einer Drucksenke verbinden.

Der Fall, dass die 3/2-Wege-Vorsteuer-Magnetventile den fahrerbremswunschabhängigen gebildeten Steuerdruck an den Steueranschluss des zugeordneten 2/2-Wegeventils durchsteuern bringt den Vorteil mit sich, dass wenn sich das ABS während einer fahrerinitiierten Bremsung in einer Druckhaltephase befindet und der Fahrer während dieser Druckhaltephase das Bremspedal löst, der fahrerbremswunschabhängig gebildete Steuerdruck sinkt und damit auch in das während der Druckhaltephase geschlossene zugeordnete 2/2-Wegeventil öffnen kann, um Bremsdruck abzubauen (Drucksenken bzw. Druckabbau). Dadurch gewinnt der Fahrer einen größeren Einfluss und kann die ABS-Funktionen "überspielen".

Im anderen Fall, wenn die 3/2-Wege-Vorsteuer-Magnetventile den Vorratsdruck des Druckreservoirs an den Steueranschluss des zugeordneten 2/2-Wegeventils durchsteuern, würde ein Lösen des Bremspedals während einer Druckhaltephase des ABS nicht zu einer Senkung des Bremsdrucks im Bremszylinder führen. Dies würde erst im Rahmen des nächsten ABS-Zyklus (Drucksenken bzw. Druckabbau) allerdings ohne Eingriffsmöglichkeit durch den Fahrer möglich sein.

Das Steuergerät ist dabei ausgebildet, dass durch Steuerung wenigstens der Ventileinrichtung und der jeweils einer Fahrzeugseite zugeordneten 2/2-Wegeventile eine radindividuelle Bremsschlupfregelung im Rahmen der typischen ABS-Funktionen Druckaufbau, Druckhalten und Druckabbau zum Erzielen eines optimalen Radschlupfes realisiert wird.

Ausgehend von diesem ABS-tauglichen Grundlayout wirkt zur Realisierung einer Antriebsschlupfregelung (ASR) die Ventileinrichtung mit lediglich einem einzigen, vom Steuergerät elektrisch gesteuerten Magnetventil derart zusammen, dass der Steueranschluss des einzigen Relaisventils abhängig vom Antriebsschlupf der Räder der Achse mit dem fahrerbremswunschabhängig gebildeten Steuerdruck, einem Vorratsdruck eines Druckreservoirs oder mit einer Drucksenke verbunden wird.

In vorteilhafter Weise wird das ABS-taugliche Grundlayout der Drucksteuervorrichtung daher um lediglich ein einziges Magnetventil ergänzt, um zusätzlich eine radindividuelle Antriebsschlupfregelung (ASR) zu realisieren. Bevorzugt ist dabei das einzige zusätzliche Magnetventil ein 3/2-Wege-Magnetventil, falls die Ventileinrichtung ebenfalls durch nur ein 3/2-Wege-Magnetventil gebildet wird.

In diesem Fall ist das Steuergerät ausgebildet, dass neben den ABS-Funktionen durch Steuerung wenigstens des einzigen zusätzlichen Magnetventils auch eine radindividuelle Antriebsschlupfregelung (ASR) realisiert wird.

Falls die Ventileinrichtung jedoch zwei 2/2-Wege-Magnetventile umfasst, so ist ein erstes 2/2-Wege-Magnetventil bevorzugt ein Auslassventil, das den Steueranschluss des einzigen Relaisventils entweder mit einer Drucksenke gemäß einer Druckabbaustellung verbindet oder diese Verbindung sperrt, und ein zweites 2/2-Wege-Magnetventil ist insbesondere ein auch als Backup-Ventil eines EBS nutzbares Ventil, das den Steueranschluss des einzigen Relaisventils entweder mit dem fahrerbremswunschabhängig gebildeten Steuerdruck gemäß einer Druckaufbaustellung verbindet oder diese Verbindung sperrt. Das zur Realisierung der Antriebsschlupfregelung der Achse vorgesehene einzige zusätzliche Magnetventil ist in diesem Fall ein als 2/2-Wege-Magnetventil ausgebildetes Einlassventil.

Durch das Einlassventil, das Auslassventil und das Backup-Ventil kann dann nicht nur eine Antriebsschlupfregelung sondern auch ein Elektronisches Bremssystems (EBS) mit vorrangigem elektro-pneumatischen Bremskreis und nachrangigem pneumatischem Bremskreis ausgebildet werden, welches darüber hinaus wenigstens einen mit wenigstens einem Arbeitsanschluss des einzigen Relaisventils in druckleitender Verbindung stehenden Drucksensor beinhaltet.

Dafür das ABS-taugliche Grundlayout mit einer aus zwei 2/2-Wege-Magnetventilen (Auslassventil, Backup-Ventil) bestehenden Ventileinrichtung zur Steuerung des einzigen Relaisventils um lediglich ein als 2/2-Wege-Magnetventil ausgebildetes Einlassventil ergänzt, um zusammen mit wenigstens einem Drucksensor und einem geeignet programmierten Steuergerät ein vollständiges Elektronisches Bremssystem (EBS) inklusive Antriebsschlupfregelung für die betreffende Achse auszubilden.

Das Steuergerät ist in diesem Fall ausgebildet, dass es neben Ausführung der ABS- und ASR-Funktionen auch durch Steuerung des Einlassventils und des Auslassventils den von dem wenigstens einen Drucksensor gemessenen Ist-Bremsdruck an einen fahrerbremswunschabhängig gebildeten Soll-Bremsdruck im Sinne einer Bremsdruckregelung anpasst.

Zur Ausbildung einer Fahrdynamikregelung ESP wird lediglich ein weiterer Drucksensor zur Messung des fahrerbremswunschabhängig gebildeten Steuerdrucks vorgesehen. Dann ist am Fahrzeug jeder Achse wenigstens eine Drucksteuervorrichtung der beschriebenen Art zugeordnet. Das ESP erweitert die ABS-/ASR-Regelung um die Größen der Fahrzeugbewegung, d.h. um die Querdynamik durch Bilden eines korrigierenden Giermoments bei Übersteuern bzw. Untersteuern. Dieses korrigierende Giermoment wird dann durch Bremsen einzelner Räder oder mehrerer Räder mittels der erfindungsgemäßen Drucksteuervorrichtung in einen Radschlupf umgesetzt.

Beispielsweise ist das Steuergerät ausgebildet, dass es bei einer durch die Fahrdynamikregelung ESP initiierten Bremsung wenigstens die Ventileinrichtung sowie das einzige zusätzliche Magnetventil derart steuert, dass der Steueranschluss des Relaisventils abhängig von der Gierrate des Fahrzeugs durch den Vorratsdruck des Druckreservoirs beaufschlagt wird, das dem ersten Bremszylinder der ersten Fahrzeugseite zugeordnete 2/2-Wegeventil in Durchlassstellung geschaltet und das dem zweiten Bremszylinder der zweiten Fahrzeugseite zugeordnete 2/2-Wegeventil in Sperrstellung geschaltet wird.

Insgesamt unterscheiden sich die verschiedenen Ausbaustufen ausgehend von dem ABS-tauglichen Grundlayout um lediglich ein einziges Ventil, um zusätzlich eine ASR-Funktion, ein EBS oder ein EBS mit Fahrdynamikregelung ESP zu realisieren. Hierdurch ergibt sich ein modularer Aufbau der Drucksteuervorrichtung, ohne dass die jeweils im Umfang einfachere Ausbaustufe in ihrem Aufbau verändert werden müsste, um das hinzuzufügende Ventil in den Aufbau integrieren zu können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.: einen Schaltplan einer Drucksteuervorrichtung eines pneumatischen Fahrzeugbremssystems mit ABS gemäß einer bevorzugten Ausführungsform;
- Fig.2: einen Schaltplan einer Drucksteuervorrichtung eines pneumatischen Fahrzeugbremssystems mit ABS gemäß einer weiteren Ausführungsform;
- Fig.3: einen Schaltplan einer Drucksteuervorrichtung eines pneumatischen Fahrzeugbremssystems mit ABS gemäß einer weiteren Ausführungsform;
- Fig.4: einen Schaltplan einer Drucksteuervorrichtung eines pneumatischen Fahrzeugbremssystems mit ABS und ASR gemäß einer weiteren Ausführungsform;
- Fig.5: einen Schaltplan einer Drucksteuervorrichtung eines pneumatischen Fahrzeugbremssystems mit ABS und ASR gemäß einer weiteren Ausführungsform;
- Fig.6: einen Schaltplan einer Drucksteuervorrichtung eines pneumatischen als Elektronisches Bremssystem EBS ausgebildeten Fahrzeugbremssystems mit ABS-/ASR-und ESP-Funktionalitäten gemäß einer weiteren Ausführungsform;
- Fig.7: eine Tabelle, in der verschiedene Schaltzustände von Ventilen der Drucksteuervorrichtung dargestellt sind;
- Fig.8: Druck/Schalt-Zeitdiagramme, welche einen Wechsel der Drucksteuervorrichtung von Druckaufbau zu Druckabbau darstellen.

### Beschreibung der Ausführungsbeispiele

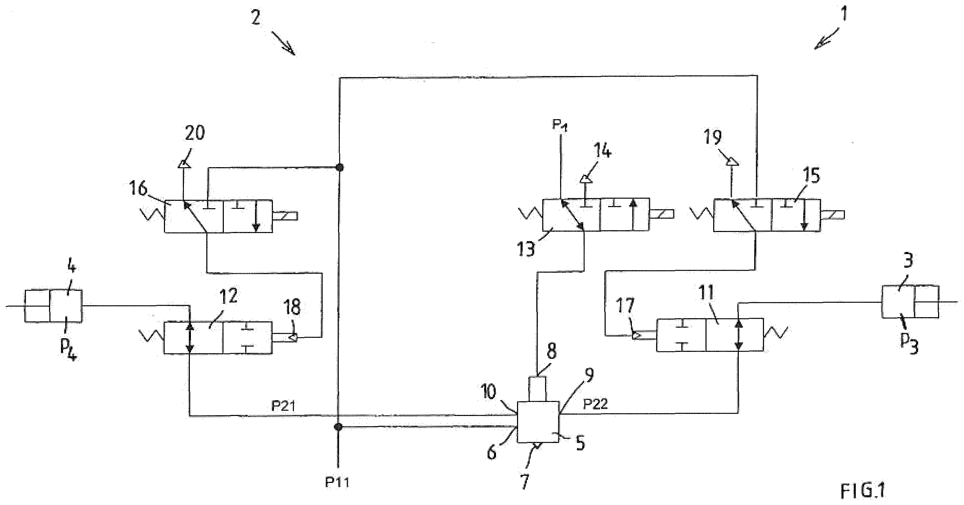

In Fig.1 ist mit 1 ein bevorzugtes Ausführungsbeispiel einer Drucksteuervorrichtung bezeichnet, welches eine Ventileinheit 2 sowie eine damit mechanisch und elektrisch direkt verbundene Elektronikeinheit als Steuergerät umfasst, welches hier aus Maßstabsgründen nicht dargestellt ist. Die Drucksteuervorrichtung 1 ist gemäß der bevorzugten Ausführungsform in eine DruckluftBremsanlage eines Nutzfahrzeugs integriert.

Die Drucksteuervorrichtung 1 ist zum radindividuellen, wenigstens bremsschlupfabhängigen Steuern von Bremsdrücken in Bremszylindern 3, 4 von Rädern einer beispielsweise angetriebenen Achse ausgebildet. Hierzu umfasst sie ein einziges Relaisventil 5, mit einem von einem Vorratsdruck p11 versorgten Vorratsanschluss 6, einem mit einer Drucksenke in Verbindung stehenden Entlüftungsanschluss 7, einem Steueranschluss 8 und mit zwei Arbeitsanschlüssen 9, 10.

Dabei ist ein erster Arbeitsanschluss 9 einem ersten Bremszylinder 3 eines Rads einer ersten Fahrzeugseite der Achse und ein zweiter Arbeitsanschluss 10 des einzigen Relaisventils 5 einem zweiten Bremszylinder 4 des Rad der zweiten Fahrzeugseite der Achse zugeordnet, um einen ersten Bremsdruck p3 in den ersten Bremszylinder 3 bzw. einen zweiten Bremsdruck p4 in den zweiten Bremszylinder 4 einsteuern zu können. Weiterhin ist jeder Arbeitsanschluss 9, 10 des Relaisventils 5 mit einem von dem Steuergerät bevorzugt indirekt gesteuerten und jeweils einer Fahrzeugseite zugeordneten 2/2-Wegeventil 11, 12 verbunden.

Die 2/2-Wegeventile 11, 12 stellen abhängig von einer hier bevorzugt indirekten Ansteuerung durch das Steuergerät entweder eine Verbindung zwischen dem betreffenden Arbeitsanschluss 9, 10 des Relaisventils 5 und dem zugeordneten Bremszylinder 3, 4 her oder sie sperren diese Verbindung.

Gemäß der Ausführungsform von Fig.1 ist der Steueranschluss 8 des Relaisventils mittels einer durch beispielsweise ein 3/2-Wege-Magnetventil 13 gebildeten und mittels des Steuergeräts gesteuerten Ventileinrichtung entweder mit einem fahrerbremswunschabhängig gebildeten Bremssteuerdruck p1 oder mit einer Drucksenke 14 verbindbar. Das 3/2-Wege-Magnetventil 13 ist bevorzugt federbelastet und dadurch stromlos in die Schaltstellung vorgespannt, in welcher es den Steueranschluss 8 des Relaisventils 5 mit dem fahrerbremswunschabhängig gebildeten Bremssteuerdruck p1 verbindet. Bestromt wird der Steueranschluss 8 des Relaisventils 5 hingegen mit der Drucksenke 14 verbunden.

Der fahrerbremswunschabhängig gebildete Bremssteuerdruck p1 wird dabei beispielsweise von einem hier nicht gezeigten fahrerbetätigten Fußbremsmodul erzeugt.

Besonders bevorzugt sind die 2/2-Wegeventile 11, 12 pneumatisch steuerbare Membranventile, welche bevorzugt durch jeweils ein vom Steuergerät elektrisch gesteuertes und derselben Fahrzeugseite zugeordnetes 3/2-Wege-Vorsteuer-Magnetventil 15, 16 pneumatisch vorgesteuert werden. Dabei sind die 3/2-Wege-Vorsteuer-Magnetventile 15, 16 bevorzugt ausgebildet, dass sie abhängig von einer Steuerung durch das Steuergerät den Vorratsdruck p11 des Druckreservoirs an einen Steueranschluss 17, 18 des zugeordneten 2/2-Wegeventils 11, 12 durchsteuern oder andererseits diesen Steueranschluss 17, 18 mit einer Drucksenke 19, 20 verbinden. Die 3/2-Wege-Vorsteuer-Magnetventile 15, 16 sind bevorzugt federbelastet und dadurch stromlos in die Schaltstellung vorgespannt, in welcher sie den Steueranschluss 17, 18 des zugeordneten 2/2-Wegeventils 11, 12 mit der Drucksenke verbinden. Bestromt werden die Steueranschlüsse 17, 18 der 2/2-Wegeventile 11, 12 dagegen mit der Drucksenke 19, 20 verbunden.

Das Steuergerät ist dabei ausgebildet, dass durch Steuerung des 3/2-Wege-Magnetventils 13 und der beiden 3/2-Wege-Vorsteuer-Magnetventile 15, 16 zur indirekten Steuerung der 2/2-Wegeventile 11, 12 eine radindividuelle Bremsschlupfregelung im Rahmen der typischen ABS-Funktionen Druckaufbau, Druckhalten und Druckabbau zum Erzielen eines optimalen Soll-Bremsschlupfes realisiert wird. Zur Berechnung des Ist-Bremsschlupfes erhält das Steuergerät in bekannter Weise Informationen über die Raddrehzahlen der Räder der Achse über hier nicht gezeigte Raddrehzahlsensoren.

Vor diesem Hintergrund ergibt sich folgende Funktionsweise der in Fig.1 dargestellten Drucksteuereinrichtung 1:
Während einer normalen Betriebsbremsung befinden sich das zentrale 3/2-Wege-Magnetventil 13 zur Vorsteuerung des Relaisventils 5 und die beiden 3/2-Wege-Vorsteuer-Magnetventile 15, 16 in der in Fig.1 gezeigten federbetätigten stromlosen Grundstellung bzw. werden in diese geschaltet so dass das 3/2-Wege-Magnetventil 13 den Steueranschluss 8 des Relaisventils 5 mit dem fahrerbremswunschabhängig gebildeten Bremssteuerdruck p1 verbindet. Folglich moduliert das Relaisventil 5 aus diesem Bremssteuerdruck p1 einen Arbeitsdruck p21 bzw. p22 an seinen beiden Arbeitsanschlüssen 9, 10. Da sich die beiden 3/2-Wege-Vorsteuer-Magnetventile 15, 16 ebenfalls in ihrer stromlosen Grundstellung befinden, sind die pneumatischen Steueranschlüsse 17, 18 der beiden 2/2-Wegeventile 11, 12 jeweils mit den Drucksenken 19, 20 verbunden, so dass sie sich in der in Fig.1 gezeigten Durchlassstellung befinden, um den an den Arbeitsanschlüssen 9, 10 des Relaisventils 5 anstehenden Arbeitsdruck p21 bzw. p22 in die Bremszylinder 3, 4 einzusteuern, aus welchen sich dann die beiden Bremsdrücke p3 und p4 ergeben. Die Arbeitsdrücke p21 bzw. p22 für die erste Fahrzeugseite und die zweite Fahrzeugseite sind dabei im Wesentlichen gleich groß.

Während einer ABS- oder bremsschlupfgeregelten Bremsung mit einer nur einseitigen Blockierneigung, beispielsweise an dem dem zweiten Bremszylinder 4 zugeordneten Rad, wird das 3/2-Wege-Magnetventil 13 zunächst bestromt und dadurch in seine Entlüftungsstellung geschaltet, in welcher der Steueranschluss 8 des Relaisventils 5 mit der Drucksenke 14 verbunden wird. Dadurch werden beide Arbeitsanschlüsse 9, 10 des Relaisventils 5 mit seiner Drucksenke 7 verbunden. Weiterhin wird auf der Fahrzeugseite, auf welcher kein Radblockieren auftritt, beispielsweise an dem dem ersten Bremszylinder 3 zugeordneten Rad das 3/2-Wege-Vorsteuer-Magnetventil 15 vom Steuergerät durch Bestromen in die Stellung geschaltet, in welcher der Steueranschluss 17 des betreffenden 2/2-Wegeventils mit dem Vorratsdruck p11 beaufschlagt wird. Dadurch schaltet das 2/2-Wegeventil 11 in seine Sperrstellung und hält dadurch den Bremsdruck p3 in dem ersten Bremszylinder 3 des nicht blockierenden Rades (Druckhalten).

Hingegen wird auf der zweiten Fahrzeugseite, auf welcher Radblockieren detektiert wurde, das 3/2-Wege-Vorsteuer-Magnetventil 16 vom Steuergerät nicht umgeschaltet, sondern es verbleibt in seiner stromlosen Grundstellung, in welcher der Steueranschluss 18 des betreffenden 2/2-Wegeventils 12 auf die Drucksenke 20 geschaltet bleibt. Dadurch verbleibt das 2/2-Wegeventil 12 in seiner in Fig.1 gezeigten Durchlassstellung, wodurch sich der Bremsdruck p4 im Bremszylinder 4 des blockierenden Rades über die Drucksenke 7 des Relaisventils 5 abbauen kann (Druckabbau).

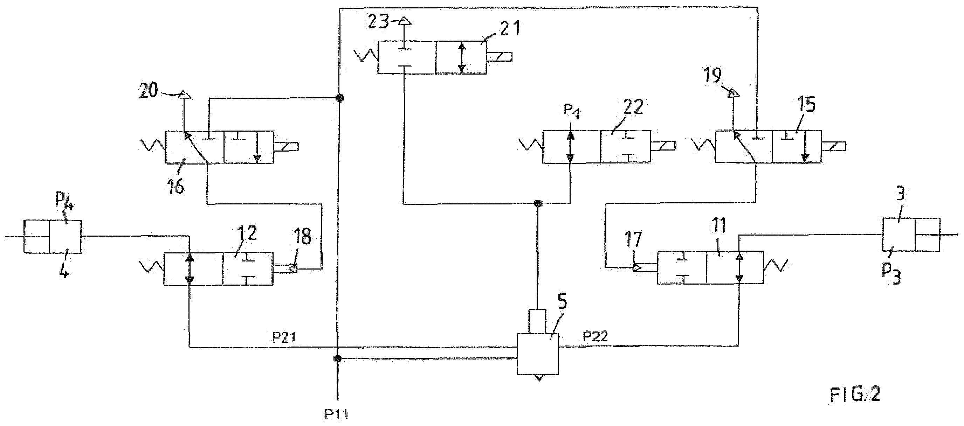

Bei den Ausführungsbeispielen nach Fig.2 bis Fig.6 sind die gegenüber dem Ausführungsbeispiel gleichbleibenden und gleich wirkenden Teile durch die gleichen Bezugszeichen gekennzeichnet.

Bei dem Ausführungsbeispiel von Fig.2 besteht die Ventileinrichtung anstatt aus einem einzigen 3/2-Wege-Magnetventil aus zwei 2/2-Wege-Magnetventilen 21, 22, wobei ein erstes 2/2-Wege-Magnetventil 21 als Auslassventil den Steueranschluss 8 des Relaisventils 5 entweder mit einer Drucksenke 23 gemäß einer Druckabbaustellung verbindet oder diese Verbindung wie gezeigt sperrt. Andererseits verbindet ein zweites 2/2-Wege-Magnetventil 22 den Steueranschluss 8 des Relaisventils 5 entweder mit dem fahrerbremswunschabhängig gebildeten Bremssteuerdruck p1 gemäß einer Druckaufbaustellung oder sperrt diese Verbindung. Beide 2/2-Wege-Magnetventile 21, 22 sind federbelastet in ihre in Fig.2 gezeigte Grundstellung geschaltet, in welcher das erste 2/2-Wege-Magnetventil 21 in Sperrstellung und das zweite 2/2-Wege-Magnetventil 22 in Durchlassstellung geschaltet ist.

Vor diesem Hintergrund ergibt sich folgende Funktionsweise der in Fig.2 dargestellten Drucksteuereinrichtung 1:
Während einer normalen Betriebsbremsung befindet sich das erste 2/2-Wege-Magnetventil 21 in stromloser Sperrstellung, das zweite 2/2-Wege-Magnetventil 22 hingegen in Durchlassstellung. Weiterhin befinden sich auch die beiden 3/2-Wege-Vorsteuer-Magnetventile 15, 16 in der in Fig.2 gezeigten federbetätigten stromlosen Grundstellung, so dass das andere 2/2-Wege-Magnetventil 22 den Steueranschluss 8 des Relaisventils 5 mit dem fahrerbremswunschabhängig gebildeten Bremssteuerdruck p1 verbindet, wie Fig.2 zeigt. Wie zuvor beschrieben moduliert das Relaisventil 5 aus diesem Bremssteuerdruck p1 einen Arbeitsdruck p21 bzw. p22 an seinen beiden Arbeitsanschlüssen 9, 10. Da sich die beiden 3/2-Wege-Vorsteuer-Magnetventile 15, 16 ebenfalls in ihrer stromlosen Grundstellung befinden, sind die pneumatischen Steueranschlüsse 17, 18 der beiden 2/2-Wegeventile 11, 12 jeweils mit den Drucksenken 19, 20 verbunden, so dass sie sich in der in Fig.2 gezeigten Durchlassstellung befinden, um den an den Arbeitsanschlüssen 9, 10 des Relaisventils 5 anstehenden Arbeitsdruck p21 bzw. p22 als Bremsdrücke p3, p4 in die Bremszylinder 3, 4 einzusteuern. Die Arbeitsdrücke p21 bzw. p22 für die erste Fahrzeugseite und die zweite Fahrzeugseite sind dabei im Wesentlichen gleich groß.

Während einer ABS- oder bremsschlupfgeregelten Bremsung mit einer nur einseitigen Blockierneigung wird das erste 2/2-Wege-Magnetventil 21 als Auslassventil bestromt und dadurch in seine Durchlassstellung geschaltet, in welcher der Steueranschluss 8 des Relaisventils 5 mit der Drucksenke 23 gemäß der Druckabbaustellung verbunden wird. Auch das zweite 2/2-Wege-Magnetventil 22 wird bestromt und dadurch in seine Sperrstellung geschaltet, wodurch der Steueranschluss 8 des Relaisventils 5 vom Bremssteuerdruck p1 abgekoppelt wird. Dadurch werden beide Arbeitsanschlüsse 9, 10 des Relaisventils 5 mit seiner Drucksenke 7 verbunden. Die Schaltung der beiden 3/2-Wege-Vorsteuer-Magnetventile 15, 16 erfolgt wie beim vorangehenden Ausführungsbeispiel beschrieben, so dass das 2/2-Wegeventil 11 der nicht blockierenden Fahrzeugseite in seine Sperrstellung geschaltet wird, wodurch der erste Bremsdruck p3 in dem ersten Bremszylinder 3 des nicht blockierenden Rades gehalten wird. (Druckhalten). Hingegen wird auf der zweiten Fahrzeugseite, auf welcher Radblockieren detektiert wurde, das 3/2-Wege-Vorsteuer-Magnetventil 16 vom Steuergerät nicht umgeschaltet, sondern es verbleibt in seiner stromlosen Grundstellung, in welcher der Steueranschluss 18 des betreffenden 2/2-Wegeventils 12 auf die Drucksenke 20 geschaltet bleibt. Dadurch verbleibt das 2/2-Wegeventil 12 in seiner in Fig.2 gezeigten Durchlassstellung, wodurch sich der zweite Arbeitsdruck p21 bzw. der zweite Bremsdruck p4 im zweiten Bremszylinder 4 des blockierenden Rades über die Drucksenke 7 des Relaisventils 5 abbauen kann (Druckabbau).

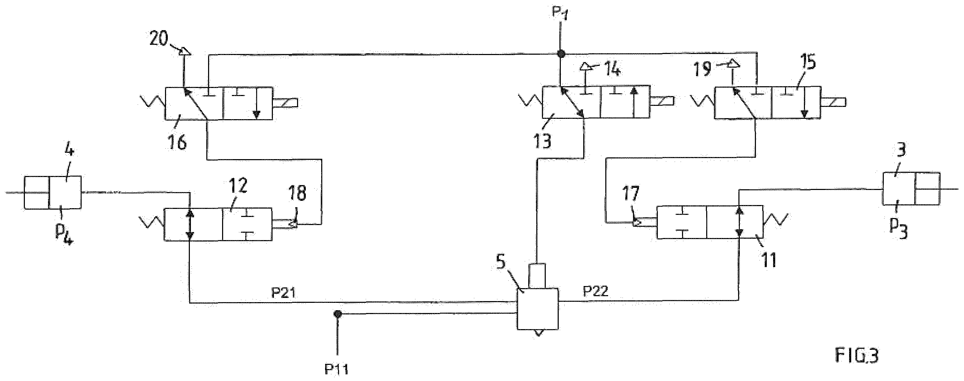

Gemäß der Ausführungsform von Fig.3 wird im Unterschied zu den Ausführungsformen nach Fig.1 und Fig.2 nicht ein Vorratsdruck p11 eines Druckreservoirs sondern der fahrerbremswunschabhängig gebildete Bremssteuerdruck p1 über die beiden 3/2-Wege-Vorsteuer-Magnetventile 15, 16 auf die Steueranschlüsse 17, 18 der 2/2-Wegeventile 11, 12 geschaltet. Wenn sich dann das ABS während einer fahrerinitiierten Bremsung in einer Druckhaltephase befindet und der Fahrer während dieser Druckhaltephase das Bremspedal löst, sinkt der fahrerbremswunschabhängig gebildete Steuerdruck p1, so dass das während der Druckhaltephase geschlossene zugeordnete 2/2-Wegeventil 11 bzw. 12 öffnen kann, um den ersten Bremsdruck p3 bzw. den zweiten Bremsdruck p4 abzubauen (Druckabbau).

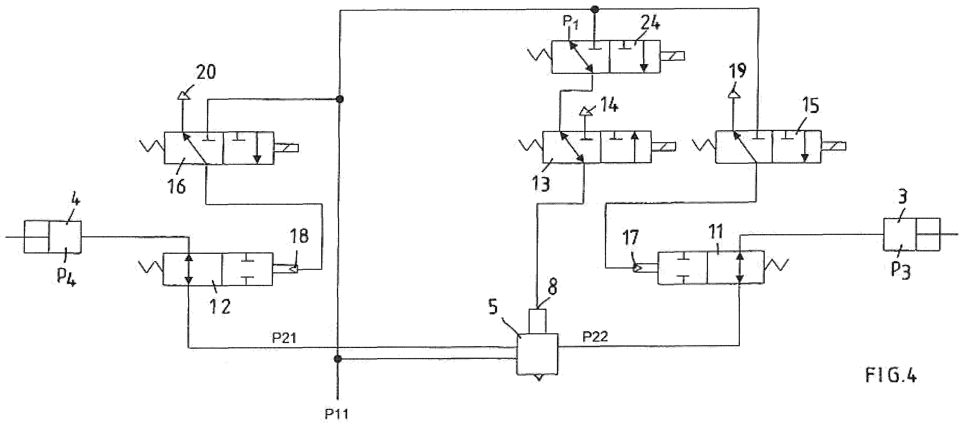

Das ABS-taugliche Grundlayout gemäß Fig.1 bis Fig.3 wird zur Realisierung einer Antriebsschlupfregelung (ASR) durch lediglich ein vom Steuergerät elektrisch gesteuertes Magnetventil 24 gemäß der Ausführungsform von Fig.4 ergänzt. Dieses Magnetventil 24 wirkt dann mit der Ventileinrichtung 13 derart zusammen, dass der Steueranschluss 8 des einzigen Relaisventils 5 abhängig vom Antriebsschlupf der Räder der Achse mit dem fahrerbremswunschabhängig gebildeten Steuerdruck p1, dem Vorratsdruck p11 des Druckreservoirs oder mit einer Drucksenke 14 verbunden wird. Bevorzugt ist dabei das einzige zusätzliche Magnetventil ein 3/2-Wege-Magnetventil 24, die Ventileinrichtung wird analog zu Fig.1 ebenfalls durch ein 3/2-Wege-Magnetventil 13 gebildet.

In diesem Fall ist das Steuergerät ausgebildet, dass neben den ABS-Funktionen durch Steuerung wenigstens des zusätzlichen 3/2-Wege-Magnetventils 24 auch eine radindividuelle Antriebsschlupfregelung (ASR) realisiert wird. Dieses zusätzliche 3/2-Wege-Magnetventil 24 ist steuerseitig des Relaisventils 5 gesehen dem die Ventileinrichtung bildenden 3/2-Wege-Magnetventil 13 vorgeschaltet. Es schaltet in seiner federbelasteten stromlosen Grundstellung den fahrerbremswunschabhängig gebildeten Steuerdruck p1 und in seiner bestromten Schaltstellung den Vorratsdruck p11 auf das 3/2-Wege-Magnetventil 13 weiter. In der bestromten Schaltstellung des 3/2-Wege-Magnetventils 24 erfolgt eine Schlupfregelung mit den Ventilen 13, 15 und 16 gemäß dem Radantriebsschlupf.

Für den Fall, dass kein übermäßiger Antriebsschlupf an beiden Rädern der Achse vorliegt, schaltet das zusätzliche ASR-Ventil 24 den fahrerbremswunschabhängig gebildeten Steuerdruck p1 auf das 3/2-Wege-Magnetventil 13 weiter, wodurch der Steueranschluss 8 des Relaisventils 5 wie zum Ausführungsbeispiel von Fig.1 beschrieben belüftet bzw. entlüftet, je nachdem, ob der fahrerbremswunschabhängig gebildete Steuerdruck p1 einen Bremslöse-Steuerdruck oder einen Bremszuspann-Steuerdruck repräsentiert. Wenn das zusätzliche ASR-Ventil 24 dabei ausgeschaltet wird, öffnen die Halteventile 11, 12 durch entsprechende Ansteuerung durch die Ventile 15, 16 automatisch. Im Falle eines Bremslöse-Steuerdrucks p1, d.h. bei nicht betätigtem Fußbremsventil steuert das Relaisventil 5 lediglich einen niedrigen Arbeitsdruck p21 bzw. p22 an seine Arbeitsanschlüsse 9, 10 aus, so dass beide Radbremszylinder 3, 4 gelöst sind.

Im Falle unzulässigen Antriebsschlupfes schaltet das zusätzliche ASR-Ventil 24 hingegen den Vorratsdruck p11 auf das diesbezüglich in Durchlassstellung geschaltete 3/2-Wege-Magnetventil 13 weiter, wodurch der Steueranschluss 8 des Relaisventils 5 durch einen Bremszuspann-Steuerdruck belüftet wird und daher einen Bremszuspanndruck an seine Arbeitsanschlüsse 9, 10 aussteuert. Die Schaltstellungen der 3/2-Wege-Vorsteuer-Magnetventile 15, 16 und der beiden 2/2-Wegeventile 11, 12 sind dann wie in Fig.4 gezeigt, so dass die Radbremszylinder 3, 4 der Achse während des Vorliegens unzulässigen Radschlupfes im Sinne einer Radschlupfregelung temporär zugespannt werden.

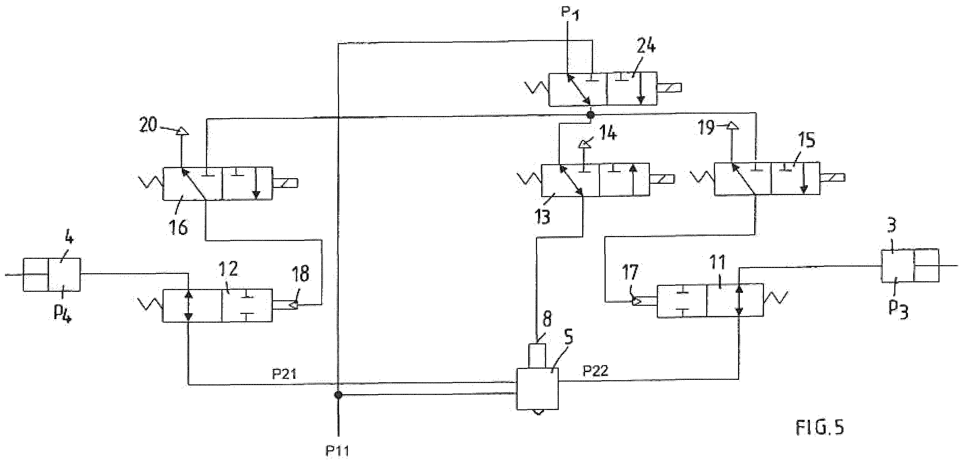

Gemäß einer hierzu alternativen Ausführungsform nach Fig.5 wird wie bei der Ausführungsform von Fig.2 nicht der Vorratsdruck p11 des Druckreservoirs sondern der fahrerbremswunschabhängig gebildete Bremssteuerdruck p1 über die beiden 3/2-Wege-Vorsteuer-Magnetventile 15, 16 auf die Steueranschlüsse 17, 18 der beiden 2/2-Wegeventile 11, 12 geschaltet. Wenn sich dann das ASR in einer Druckhaltephase befindet und der Fahrer während dieser Druckhaltephase das Bremspedal betätigt, steigt der fahrerbremswunschabhängig gebildete Steuerdruck p1, so dass das während der Druckhaltephase geschlossene zugeordnete 2/2-Wegeventil 11 bzw. 12 öffnen kann, um Bremsdruck p21 bzw. p22 aufzubauen (Druckaufbau).

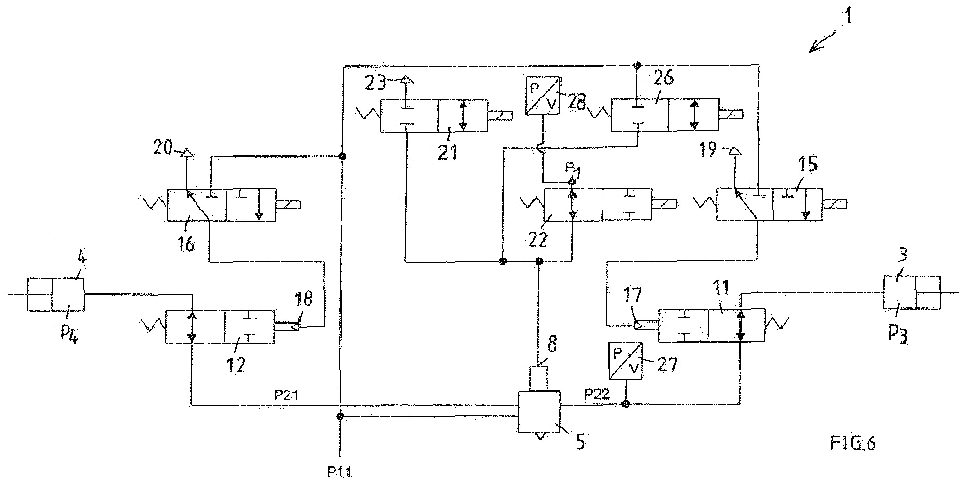

Falls die Ventileinrichtung kein 3/2-Wege-Magnetventil 13 sondern zwei 2/2-Wege-Magnetventile 21, 22 gemäß Fig.3 und Fig.6 umfasst, so ist das eine 2/2-Wege-Magnetventil 21 bevorzugt ein Auslassventil, das den Steueranschluss 8 des Relaisventils 5 entweder mit seiner Drucksenke 23 verbindet oder diese Verbindung sperrt. Das zweite 2/2-Wege-Magnetventil 22 ist insbesondere ein auch als Backup-Ventil eines EBS nutzbares Ventil, das den Steueranschluss 8 des Relaisventils 5 entweder mit dem fahrerbremswunschabhängig gebildeten Steuerdruck p1 verbindet oder diese Verbindung sperrt. Das zur Realisierung der Antriebsschlupfregelung der Achse vorgesehene einzige zusätzliche Magnetventil ist gemäß der Ausführungsform von Fig.6 bevorzugt ein als 2/2-Wege-Magnetventil ausgebildetes Einlassventil 26.

Gemäß Fig.6 wird durch das Einlassventil 26, das erste 2/2-Wegemagnetventil 21 als Auslassventil und das Backup-Ventil 22 dann nicht nur eine Bremsschlupfregelung (ABS) und eine Antriebsschlupfregelung (ASR) sondern auch ein Elektronisch geregeltes Bremssystems (EBS) mit vorrangigem elektro-pneumatischen Bremskreis und nachrangigem pneumatischem Bremskreis ausgebildet, falls zusätzlich noch beispielsweise ein Arbeitsanschluss 9, 10 des einzigen Relaisventils 5 in druckleitender Verbindung mit einem Drucksensor 27 steht.

Das Steuergerät ist in diesem Fall ausgebildet, dass es neben Ausführung der ABS- und ASR-Funktionen auch durch Steuerung des Einlassventils 26 und des ersten 2/2-Wegemagnetventils 21 als Auslassventils den von dem Drucksensor 27 gemessenen Ist-Bremsdruck an einen fahrerbremswunschabhängig gebildeten Soll-Bremsdruck im Sinne einer Bremsdruckregelung anpasst.

Die Funktionsweise des EBS ist dann wie folgt:
Im Zuge einer normalen Bremsung verbleibt das erste 2/2-Wegemagnetventil 21 als Auslassventil in seiner federbelasteten Sperrstellung, während das Einlassventil 26 in Durchgangsstellung geschaltet wird, um den Steueranschluss 8 des Relaisventils 5 mit Vorratsdruck zu belüften. Dies sorgt für Arbeitsdruck p21 bzw. p22 an den beiden Arbeitsanschlüssen 9, 10 des Relaisventils 5, welcher über die beiden durchgeschalteten 2/2-Wegeventile 11, 12 zu den Radbremszylindern 3, 4 durchgesteuert werden. Das Backup-Ventil 22 verbleibt dabei in seiner bestromten Sperrstellung, so dass der an ihm anstehende fahrerbremswunschabhängig gebildete Steuerdruck p1 nicht an den Steueranschluss 8 des Relaisventils 5 durchgeschaltet werden kann.

Falls der elektrische Bremskreis des EBS jedoch ausfällt, so können die Magnetventile 15, 16, 21, 22, 26 nicht mehr bestromt werden. So schaltet das Einlassventil 26 in seine stromlose und federbelastete Sperrstellung zurück, so dass kein Vorratsdruck mehr an den Steueranschluss 8 des Relaisventils 5 gelangt. Das erste 2/2-Wegemagnetventil 21 als Auslassventil verbleibt ebenfalls in Sperrstellung. Der Steueranschluss 8 des Relaisventils 8 wird dann über das stromlos federbelastet in Durchgangsstellung geschaltete Backup-Ventil 22 mit dem vom Fußbremsventil erzeugten fahrerbremswunschabhängig gebildeten Steuerdruck p1 beaufschlagt, um die Radbremszylinder 3, 4 zuzuspannen.

Die ABS- bzw. ASR-Funktionen laufen dann wie bei den vorangehend beschriebenen Ausführungsformen ab, d.h. der Steueranschluss 8 des Relaisventils 5 wird funktionsabhängig über das Einlassventil 26 mit dem Vorratsdruck p11, über das Backup-Ventil 22 dem fahrerbremswunschabhängig gebildeten Steuerdruck p1 oder über das erste 2/2-Wegemagnetventil 21 als Auslassventil mit der Drucksenke 23 des Auslassventils 21 verbunden.

In einer weiteren Ausbaustufe ist neben dem Drucksensor 27 zur Messung des Bremsdrucks p21 bzw. p22 ein weiterer Drucksensor 28 zur Messung des fahrerbremswunschabhängig gebildeten Bremssteuerdrucks p1 vorgesehen. Falls dann jeweils eine Drucksteuervorrichtung 1 gemäß Fig.6 für jede Achse, beispielsweise für eine Vorderachse und für eine Hinterachse vorgesehen wird, kann eine Fahrdynamikregelung (ESP) realisiert werden.

Das Steuergerät ist dabei ausgebildet, dass es bei einer durch die Fahrdynamikregelung (ESP) initiierten Bremsung das erste 2/2-Wegemagnetventil 21 als Auslassventil, das Backup-Ventil 22 sowie das Einlassventil 26 derart steuert, dass der Steueranschluss 8 des Relaisventils 5 abhängig von der Gierrate des Fahrzeugs durch den Vorratsdruck p11 des Druckreservoirs beaufschlagt wird. Hierzu werden beispielsweise das erste 2/2-Wegemagnetventil 21 als Auslassventil sowie das zweite 2/2-Wegemagnetventil 22 als Backup-Ventil in ihre Sperrstellungen geschaltet, während das Einlassventil 26 in Durchlassstellung geschaltet wird, um den Steueranschluss 8 des Relaisventils 5 zu belüften.

Weiterhin werden die 3/2-Wege-Vorsteuer-Magnetventile 15, 16 vom Steuergerät so angesteuert, dass beispielsweise das dem ersten Bremszylinder 3 der ersten Fahrzeugseite zugeordnete 2/2-Wegeventil 11 in Durchlassstellung geschaltet wird, um diesen ersten Bremszylinder 3 zu belüften und das dem zweiten Bremszylinder 4 der zweiten Fahrzeugseite zugeordnete 2/2-Wegeventil 12 in Sperrstellung geschaltet wird, um diesen zweiten Bremszylinder 4 vom Druckaufbau abzusperren. Es versteht sich, dass bei einem in der Gegenrichtung aufzubauenden Giermoment das 2/2-Wegeventil 11 in Sperrstellung und das 2/2-Wegeventil 12 in Durchlassstellung durch eine entsprechende Ansteuerung der 3/2-Wege-Vorsteuer-Magnetventile 15, 16 geschalten werden muss.

Eine oben beschriebene Drucksteuervorrichtung 1 bzw. ein oben beschriebenes Verfahren zum Steuern einer solchen Drucksteuervorrichtung 1 ist aus der eingangs genannten DE 10 2010 010 606 A1 bekannt. Die vorliegende Erfindung basiert auf den Merkmalen der aus diesem Dokument bekannten Drucksteuervorrichtung 1 bzw. auf deren Steuerung und beinhaltet diese auch.

Um die eingangs genannten Nachteile hinsichtlich der Reaktionsträgheit des Relaisventils 5 zu beseitigen, wird vorgeschlagen, dass
- für einen Druckabbau an wenigstens einem Bremszylinder 3, 4 das 3/2-Wegemagnetventil 13 bzw. das erste 2/2-Wegeventil 21in Druckabbaustellung geschaltet wird, und solange der Arbeitsdruck p21, p22 an dem dem wenigstens einen Bremszylinder 3, 4 zugeordneten Arbeitsanschluss 9, 10 des Relaisventils 5 noch größer als der Druck p3, p4 in dem betreffenden Bremszylinder 3, 4 oder gleich diesem ist, das dem betreffenden Bremszylinder 3, 4 zugeordnete 2/2-Wegeventil 11, 12 in Sperrstellung geschaltet wird oder bleibt und erst wenn der Arbeitsdruck p21, p22 an dem betreffenden Arbeitsanschluss 9, 10 des Relaisventils 5 kleiner als der Druck p3, p4 in dem betreffenden Bremszylinder 3, 4 ist, das dem betreffenden Bremszylinder 3, 4 zugeordnete 2/2-Wegeventil 11, 12 in Durchlassstellung geschaltet wird, und dass
- für einen Druckaufbau an wenigstens einem Bremszylinder 3, 4 das 3/2-Wegemagnetventil 13 bzw. das zweite 2/2-Wegeventil 22 in Druckaufbaustellung geschaltet wird, und solange der Arbeitsdruck p21, p22 an dem dem wenigstens einen Bremszylinder 3, 4 zugeordneten Arbeitsanschluss 9, 10 des Relaisventils 5 noch kleiner als der Druck p3, p4 in dem betreffenden Bremszylinder 3, 4 oder gleich diesem ist, das dem betreffenden Bremszylinder 3, 4 zugeordnete 2/2-Wegeventil 11, 12 in Sperrstellung geschaltet wird oder bleibt und erst wenn der Arbeitsdruck p21, p22 an dem betreffenden Arbeitsanschluss 9, 10 des Relaisventils 5 größer als der Druck p3, p4 in dem betreffenden Bremszylinder 3, 4 ist, das dem betreffenden Bremszylinder 3, 4 zugeordnete 11, 12 in Durchlassstellung geschaltet wird.

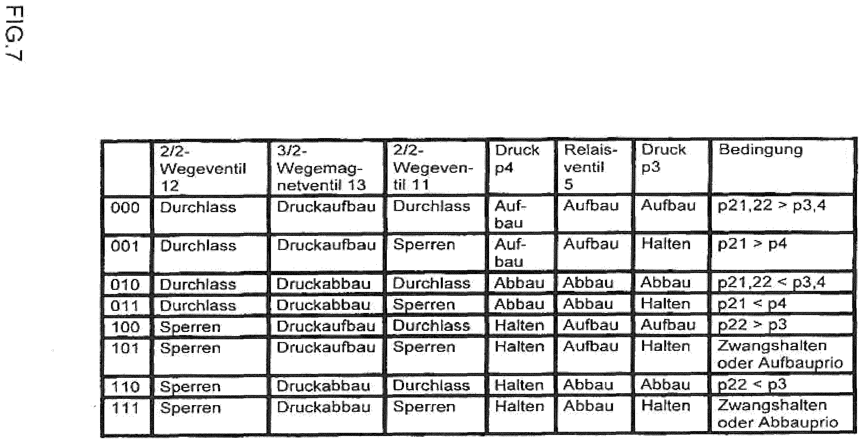

In Fig.7 ist eine Tabelle dargestellt, in der verschiedene Schaltzustände von Ventilen der Drucksteuervorrichtung gezeigt sind.

Bei der dort mit "000" bezeichneten Betriebssituation sollen der Druck p3 in dem ersten Bremszylinder 3 und der Druck p4 in dem zweiten Bremszylinder 4 z.B. im Rahmen einer normalen Betriebsbremsung gesteigert werden. Dazu werden das 3/2-Wege-Magnetventil in Druckaufbaustellung und die beiden 2/2-Wegeventile 11 und 12 in Durchlassstellung geschaltet. Damit ein Druckaufbau in den beiden Bremszylindern 3, 4 stattfinden kann, wird vor dem Schalten der beiden 2/2-Wegeventile 11 und 12 in Durchlassstellung geprüft, ob die Arbeitsdrücke p21 und p22 größer als die Drücke p3 und p4 in den Bremszylindern sind und erst dann in Durchlassstellung geschaltet, andernfalls mit dem Schalten in die Durchlassstellung abgewartet, bis diese Bedingung erfüllt ist.

Bei der mit "001" bezeichneten Betriebssituation soll der Bremsdruck p4 nur in dem zweiten Bremszylinder 4 gesteigert hingegen der Bremsdruck p3 in dem ersten Bremszylinder 3 gehalten werden. Dazu werden das 3/2-Wege-Magnetventil in Druckaufbaustellung und das 2/2-Wegeventil 11 in Sperrstellung sowie das 2/2-Wegeventil 12 in Durchlassstellung geschaltet. Damit ein Druckaufbau in dem zweiten Bremszylinder 4 stattfinden kann, wird vor dem Schalten des 2/2-Wegeventils 12 in Durchlassstellung geprüft, ob der zugeordnete Arbeitsdruck p21 größer als der Druck p4 in dem zweiten Bremszylinder 4 ist und erst dann in die Durchlassstellung geschaltet, andernfalls mit dem Schalten in die Durchlassstellung abgewartet, bis diese Bedingung erfüllt ist.

Bei der mit "010" bezeichneten Betriebssituation sollen der Druck p3 in dem ersten Bremszylinder 3 und der Druck p4 in dem zweiten Bremszylinder 4 abgebaut werden. Hierzu werden das 3/2-Wege-Magnetventil in Druckabbaustellung und die beiden 2/2-Wegeventile 11 und 12 in Durchlassstellung geschaltet. Damit ein Druckabbau in den beiden Bremszylindern 3, 4 stattfinden kann, wird vor dem Schalten der beiden 2/2-Wegeventile 12 in Durchlassstellung geprüft, ob die Arbeitsdrücke p21 und p22 kleiner als die Drücke p3 und p4 in den Bremszylindern sind und erst dann in die Durchlassstellung geschaltet, andernfalls mit dem Schalten in die Durchlassstellung abgewartet, bis diese Bedingung erfüllt ist.

Bei der mit "011" bezeichneten Betriebssituation soll der Bremsdruck p4 in dem zweiten Bremszylinder 4 abgesenkt und der Bremsdruck p3 in dem ersten Bremszylinder 3 gehalten werden. Dazu werden das 3/2-Wege-Magnetventil in Druckabbaustellung, das 11 in Sperrstellung sowie das 12 in Durchlassstellung geschaltet. Damit ein Druckabbau in dem zweiten Bremszylinder 4 stattfinden kann, wird vor dem Schalten des 2/2-Wegeventils 12 in die Durchlassstellung geprüft, ob der zugeordnete Arbeitsdruck p21 kleiner als der Druck p4 in dem zweiten Bremszylinder 4 ist und erst dann in die Durchlassstellung geschaltet, andernfalls mit dem Schalten in die Durchlassstellung abgewartet, bis diese Bedingung erfüllt ist..

Bei der mit "100" bezeichneten Betriebssituation soll der Bremsdruck p4 in dem zweiten Bremszylinder 4 gehalten und der Bremsdruck p3 in dem ersten Bremszylinder 3 gesteigert werden. Dazu werden das 3/2-Wege-Magnetventil in Druckaufbaustellung, das 2/2-Wegeventil 11 in Durchlassstellung sowie das 2/2-Wegeventil 12 in Sperrstellung geschaltet. Damit ein Druckaufbau in dem ersten Bremszylinder 3 stattfinden kann, wird vor dem Schalten des 2/2-Wegeventils 11 in die Durchlassstellung geprüft, ob der zugeordnete Arbeitsdruck p22 größer als der Druck p3 in dem ersten Bremszylinder 3 ist und erst dann in die Durchlassstellung geschaltet, andernfalls mit dem Schalten in die Durchlassstellung abgewartet, bis diese Bedingung erfüllt ist.

Bei der mit "101" bezeichneten Betriebssituation wird der Bremsdruck p4 in dem zweiten Bremszylinder 4 und der Bremsdruck p3 in dem ersten Bremszylinder 3 zunächst gehalten. Dazu werden das 3/2-Wege-Magnetventil beispielsweise in Druckaufbaustellung und die beiden 11, 12 in Sperrstellung geschaltet. Dieses Halten der Drücke durch Sperren der beiden 11, 12 findet beispielsweise nur über einen Zeitraum statt, den das Relaisventil 5 aufgrund seiner Trägheit benötigt, um die Arbeitsdrücke p21 und p22 auf einen Wert zu bringen, der größer als die Bremsdrücke p3 und p4 in den beiden Bremszylindern ist. Erst nach Ablauf dieses Zeitraums wird dann eines der beiden 2/2-Wegeventile 11, 12 oder auch beide 2/2-Wegeventile 11, 12 in Durchlassstellung geschaltet, um einen der Drücke p3 oder p4 zu steigern oder um beide Drücke p3 und p4 zu steigern. Insofern liegt hier ein "Zwangshalten" vor. Weiterhin befindet sich die Drucksteuervorrichtung 1 in einer Art "Aufbaupriorität", weil durch das Schalten des 3/2-Wegeventils 13 in Druckaufbaustellung ein Druckaufbau in einem oder in beiden Bremszylindern 3, 4 vorbereitet wurde.

Bei der mit "110" bezeichneten Betriebssituation soll der Bremsdruck p4 in dem zweiten Bremszylinder 4 gehalten und der Bremsdruck p3 in dem ersten Bremszylinder 3 gesenkt werden. Dazu werden das 3/2-Wege-Magnetventil in Druckabbaustellung, das 2/2-Wegeventil 11 in Durchlassstellung sowie das 2/2-Wegeventil 12 in Sperrstellung geschaltet. Damit ein Druckabbau in dem ersten Bremszylinder 3 stattfinden kann, wird vor dem Schalten des 2/2-Wegeventils 11 in die Durchlassstellung geprüft, ob der zugeordnete Arbeitsdruck p22 kleiner als der Druck p3 in dem ersten Bremszylinder 3 ist und erst dann in die Durchlassstellung geschaltet, andernfalls mit dem Schalten in die Durchlassstellung abgewartet, bis diese Bedingung erfüllt ist.

Bei der mit "111" bezeichneten Betriebssituation wird der Bremsdruck p4 in dem zweiten Bremszylinder 4 und der Bremsdruck p3 in dem ersten Bremszylinder 3 zunächst gehalten. Dazu werden das 3/2-Wege-Magnetventil beispielsweise in Druckabbaustellung und die beiden 11, 12 in Sperrstellung geschaltet. Dieses Halten der Drücke durch Sperren der beiden 11, 12 findet beispielsweise nur über einen Zeitraum statt, den das Relaisventil 5 aufgrund seiner Trägheit benötigt, um die Arbeitsdrücke p21 und p22 auf einen Wert zu bringen, der kleiner als die Bremsdrücke p3 und p4 in den beiden Bremszylindern 3, 4 ist. Erst nach Ablauf dieses Zeitraums wird dann eines der beiden 2/2-Wegeventile 11, 12 oder auch beide 2/2-Wegeventile 11, 12 in Durchlassstellung geschaltet, um einen der Drücke p3 oder p4 zu senken oder um beide Drücke p3 und p4 zu senken. Insofern liegt hier ebenfalls ein "Zwangshalten" vor. Weiterhin befindet sich die Drucksteuervorrichtung 1 in einer Art "Abbaupriorität", weil durch das Schalten des 3/2-Wegeventils 13 in Druckabbaustellung ein Druckabbau in einem oder in beiden Bremszylindern 3, 4 vorbereitet wurde.

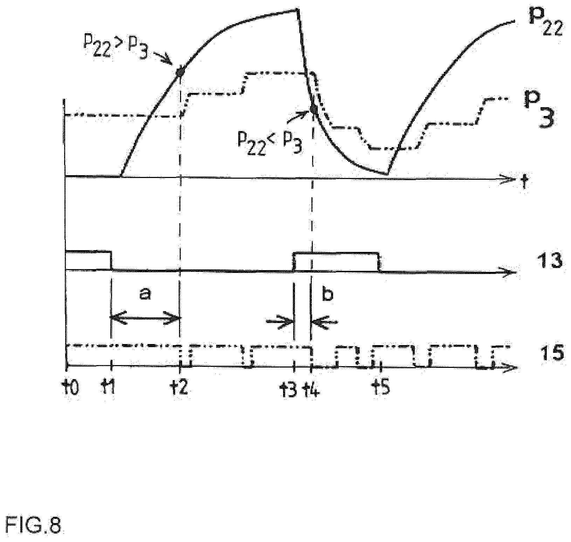

In Fig.8 sind der Verlauf des Arbeitsdrucks p22 am Arbeitsanschluss 9 des Relaisventils 5 und des Drucks p3 im Bremszylinder 3 sowie der Schaltverlauf des 3/2-Wegeventil 13 und des 2/2-Wegeventils 13 über der Zeit t in einer Betriebssituation dargestellt, in welcher es beispielsweise bedingt durch übermäßigen Bremsschlupf im Rahmen von ABS als Ausgangssituation zu einem Druckabbau kam und nach Reduzierung des Bremsschlupfes auf einen zulässigen Bremsschlupf der Bremsdruck wieder aufgebaut wird. Danach ist wegen eines angenommen erneut auftretenden übermäßigen Bremsschlupfes ein erneuter Wechsel von Druckaufbau zu Druckabbau notwendig.

Bei vorliegendem Druckabbau zum Zeitpunkt t0, in welchem sich das 3/2-Wegemagnetventil 13 in seiner Druckabbaustellung (in Fig.8 symbolisiert durch einen mit durchgezogener Linie gezeichneten hohen Balken) befindet, wird das 3/2-Wegemagnetventil 13 zum Zeitpunkt t1 in seine Druckaufbaustellung (in Fig.8 symbolisiert durch einen mit durchgezogener Linie gezeichneten niedrigen Balken) geschaltet (Wechsel von Druckabbau zu Druckaufbau). Zu den Zeitpunkten t0 und t1 liegt im Bremszylinder ein etwa konstanter Bremsdruck p3 größer als 0 an.

Wie der Druckverlauf des Arbeitsdrucks p22 am dem Bremszylinder 3 zugeordneten Arbeitsanschluss 9 in Fig.8 zeigt, steigt der Arbeitsdruck p22 aufgrund der Trägheit des Relaisventils 5 aber nur langsam an, obwohl der Steueranschluss 8 des Relaisventils über das in Druckaufbaustellung geschaltete 3/2-Wegemagnetventil 13 zum Zeitpunkt t1 bereits belüftet wird.

Da folglich die Bedingung p22 > p3 noch nicht erfüllt ist, verbleibt das dem Bremszylinder 3 zugeordnete 11 über einen Zeitraum a noch in Sperrstellung, was durch das weiterhin aktivierte 3/2-Wege-Vorsteuer-Magnetventil 15 realisiert wird, welches das 2/2-Wegeventil 11 vorsteuert.

Wenn dann nach Ablauf des Zeitraums a zum Zeitpunkt t2 die Bedingung p22 > p3 erfüllt ist, wird das 3/2-Wege-Vorsteuer-Magnetventil 15 gepulst angesteuert, um das 2/2-Wegeventil 11 kurzzeitig in Durchlassstellung und dann wieder in Sperrstellung zu schalten, was eine stufenartige Steigerung des Drucks p3 im Bremszylinder 3 nach sich zieht. Dem ersten Ansteuerpuls des 3/2-Wege-Vorsteuer-Magnetventil 15 folgt ein zweiter Ansteuerpuls, wodurch aber ohne Wartezeit das 11 sofort in Durchlassstellung geschaltet wird, weil nun die Bedingung p22 > p3 sofort erfüllt ist.

Wenn dann zu einem späteren Zeitpunkt t3 festgestellt wird, dass aufgrund übermäßigen Bremsschlupfes ein Druckabbau notwendig ist (Wechsel von Druckaufbau zu Druckabbau), wird das 3/2-Wegemagnetventil 13 von der Druckaufbaustellung in seine Druckabbaustellung geschaltet. Dabei erfolgt ein Druckabbau des Arbeitsdrucks p22 am Arbeitsanschluss 9 wiederum zeitverzögert, wobei erst nach Ablauf eines Zeitraums b zum Zeitpunkt t4 die Bedingung p22 < p3 erfüllt ist und daher erst zum Zeitpunkt t4 das 3/2-Wege-Vorsteuer-Magnetventil 15 gepulst angesteuert wird, um das 2/2-Wegeventil 11 kurzzeitig in Durchlassstellung und dann wieder in Sperrstellung zu schalten, was eine stufenartige Reduktion des Drucks p3 im Bremszylinder 3 nach sich zieht.

Zum Zeitpunkt t5 ist bremsschlupfregelungsbedingt beispielsweise wiederum ein Druckaufbau im Bremszylinder 3 notwendig, wozu das 3/2-Wegemagnetventil 13 wieder in Druckaufbaustellung geschaltet wird.

Insgesamt wird daher das 2/2-Wegeventil 11 bevorzugt gepulst von seiner Sperrstellung in die Durchlassstellung geschaltet, wobei die Zeitabschnitte für die Durchlassphasen und die Sperrphasen davon abhängig sind, wie schnell der Druck p3 im Bremszylinder 3 gesteigert oder reduziert werden soll. Die gepulste Steuerung des 2/2-Wegeventils 11 erfolgt hierbei bevorzugt pneumatisch mittels des 3/2-Wege-Vorsteuer-Magnetventils 15, welches entsprechend elektrisch gepulst vom Steuergerät angesteuert wird. Alternativ könnte das 2/2-Wegeventil 11 aber auch ein Magnetventil sein und dann vom Steuergerät direkt angesteuert werden.

Der hier exemplarisch nur für den ersten Bremszylinder 3 beschriebene Ablauf von Wechseln zwischen Druckaufbau und Druckabbauphasen kann natürlich auch so oder in ähnlicher Weise am zweiten Bremszylinder 4 stattfinden oder parallel an beiden Bremszylindern 3 und 4. Obwohl der Ablauf hier exemplarisch anhand einer ABS-Regelung dargestellt wurde, kann er selbstverständlich auch im Rahmen einer beliebigen Regelung, insbesondere nach einer Regelung gemäß ASR- oder ESP stattfinden. Auch können für den oben beschriebenen Ablauf anstatt des einen 3/2-Wegemagnetventil 13 die beiden 2/2-Wegemagnetventile nach Fig.2 oder Fig.6 verwendet werden.

Bevorzugt werden bei dem voranstehend beschriebenen Verfahren die Drück p3, p4 in den Bremszylindern 3, 4 und/oder der Arbeitsdruck p21, p22 an dem betreffenden Arbeitsanschluss 9, 10 des Relaisventils 5 mittels eines hier nicht gezeigten Drucksensors gemessen oder mittels eines Schätzalgorithmus aus anderen Größen geschätzt.

Bevorzugt wird auch ein Druckaufbau oder ein Druckabbau an dem ersten Bremszylinder 3 erst vollständig abgeschlossen, bevor mit einem Druckaufbau oder einem Druckabbau an dem zweiten Bremszylinder 4 begonnen wird und umgekehrt.

Gemäß einer Weiterbildung werden das 3/2-Wegemagnetventil 13 bzw. die beiden 2/2-Wegemagnetventile nach Fig.2 oder Fig.6 zum Druckaufbau oder zum Druckabbau pulsweitenmoduliert angesteuert. Dadurch ergibt sich ein schnelles Umschalten zwischen der Druckaufbaustellung und der Druckabbaustellung, wodurch ein Schwebedruck in der mit dem Steueranschluss 8 verbundenen Steuerkammer des Relaisventils 5 entsteht, was die Reaktionszeit des Relaisventils 5 verbessert und dessen Trägheit etwas vermindert.

Insbesondere können das 3/2-Wegemagnetventil 13 bzw. die beiden 2/2-Wegemagnetventile nach Fig.2 oder Fig.6 gemäß einer Ausgangsstellung, in welcher keine Bremsanforderung vorliegt, in die Druckabbaustellung oder in die Druckaufbaustellung angesteuert sein.

Das in den Figuren 7 und 8 bzw. oben beschriebene Verfahren ist zur Steuerung einer Drucksteuervorrichtung 1 nach den Ausführungsformen gemäß Figuren 1 bis 6 vorgesehen.

### Bezugszeichenliste

- 1: Drucksteuervorrichtung
- 2: Ventileinheit
- 3: erster Bremszylinder
- 4: zweiter Bremszylinder
- 5: Relaisventil
- 6: Vorratsanschluss RV
- 7: Entlüftungsanschluss RV
- 8: Steueranschluss RV
- 9: erster Arbeitsanschluss RV
- 10: zweiter Arbeitsanschluss RV
- 11: 2/2-Wegeventil
- 12: 2/2-Wegeventil
- 13: 3/2-Wege-Magnetventil
- 14: Drucksenke
- 15: 3/2-Wege-Vorsteuer-Magnetventil
- 16: 3/2-Wege-Vorsteuer-Magnetventil
- 17: Steueranschluss
- 18: Steueranschluss
- 19: Drucksenke
- 20: Drucksenke
- 21: erstes 2/2-Wegemagnetventil (Auslassventil)
- 22: zweites 2/2-Wegemagnetventil (Backup-Ventil)
- 23: Drucksenke
- 24: Magnetventil
- 26: Einlassventil
- 27: Drucksensor
- 28: Drucksensor

## Patentansprüche

1. Verfahren zum Steuern einer Drucksteuervorrichtung (1) einer Druckmittel-Bremsanlage eines Fahrzeugs zum radindividuellen Steuern von Bremsdrücken in Bremszylindern (3, 4) von Rädern einer Achse, wobei die Drucksteuervorrichtung (1) wenigstens Folgendes beinhaltet:
a) Ein Relaisventil (5), mit einem von einem Vorratsdruck (p11) versorgten Vorratsanschluss (6), einem mit einer Drucksenke in Verbindung stehenden Entlüftungsanschluss (7), einem Steueranschluss (8) und mit wenigstens zwei Arbeitsanschlüssen (9, 10), wobei ein erster Arbeitsanschluss (9) einem ersten Bremszylinder (3) eines Rades einer ersten Fahrzeugseite der Achse und ein zweiter Arbeitsanschluss (10) des Relaisventils (5) einem zweiten Bremszylinder (4) eines Rades einer zweiten Fahrzeugseite der Achse zugeordnet ist,
b) von einem Steuergerät direkt oder indirekt gesteuerte und jeweils einer Fahrzeugseite zugeordnete 2/2-Wegeventile (11, 12), welche jeweils mit einem Arbeitsanschluss (9, 10) des Relaisventils (5) verbunden sind und welche abhängig von der Ansteuerung durch das Steuergerät entweder eine Verbindung zwischen dem betreffenden Arbeitsanschluss (9, 10) des Relaisventils und dem zugeordneten Bremszylinder (3, 4) gemäß einer Durchlassstellung herstellt oder diese Verbindung gemäß einer Sperrstellung sperrt, und
c) eine durch ein 3/2-Wege-Magnetventil (13) oder durch zwei 2/2-Wege-Magnetventile (21, 22) gebildete und mittels des Steuergeräts gesteuerte Ventileinrichtung, welche den Steueranschluss (8) des Relaisventils (5) gemäß einer Druckaufbaustellung mit einem fahrerbremswunschabhängig gebildeten Bremssteuerdruck (p1) oder gemäß einer Druckabbaustellung mit einer Drucksenke (14; 23) verbindet, **dadurch gekennzeichnet, dass**
d) für einen Druckabbau an wenigstens einem Bremszylinder (3, 4) die Ventileinrichtung (13; 21, 22) in Druckabbaustellung geschaltet wird, und solange der Arbeitsdruck (p21, p22) an dem dem wenigstens einen Bremszylinder (3, 4) zugeordneten Arbeitsanschluss (9, 10) des Relaisventils (5) noch größer als der Druck (p3, p4) in dem betreffenden Bremszylinder (3, 4) oder gleich diesem ist, das dem betreffenden Bremszylinder (3, 4) zugeordnete 2/2-Wegeventil (11, 12) in Sperrstellung geschaltet wird oder bleibt und erst wenn der Arbeitsdruck (p21, p22) an dem betreffenden Arbeitsanschluss (9, 10) des Relaisventils (5) kleiner als der Druck (p3, p4) in dem betreffenden Bremszylinder (3, 4) ist, das dem betreffenden Bremszylinder (3, 4) zugeordnete 2/2-Wegeventil (11, 12) in Durchlassstellung geschaltet wird, und dass
e) für einen Druckaufbau an wenigstens einem Bremszylinder (3, 4) die Ventileinrichtung (13; 21, 22) in Druckaufbaustellung geschaltet wird, und solange der Arbeitsdruck (p21, p22) an dem dem wenigstens einen Bremszylinder (3, 4) zugeordneten Arbeitsanschluss (9, 10) des Relaisventils (5) noch kleiner als der Druck (p3, p4) in dem betreffenden Bremszylinder (3, 4) oder gleich diesem ist, das dem betreffenden Bremszylinder (3, 4) zugeordnete 2/2-Wegeventil (11, 12) in Sperrstellung geschaltet wird oder bleibt und erst wenn der Arbeitsdruck (p21, p22) an dem betreffenden Arbeitsanschluss (9, 10) des Relaisventils (5) größer als der Druck (p3, p4) in dem betreffenden Bremszylinder (3, 4) ist, das dem betreffenden Bremszylinder (3, 4) zugeordnete 2/2-Wegeventil (11, 12) in Durchlassstellung geschaltet wird.

2. Verfahren nach Anspruch 1, **dadurch gekennzeichnet, dass** der Druck (p3, p4) in dem wenigstens einen Bremszylinder (3, 4) und/oder der Arbeitsdruck (p21, p22) an den Arbeitsanschlüssen (9, 10) des Relaisventils (5) mittels eines Drucksensors gemessen oder mittels eines Schätzalgorithmus geschätzt wird.

3. Verfahren nach Anspruch 1 oder 2, **dadurch gekennzeichnet, dass** ein Druckaufbau oder ein Druckabbau an dem ersten Bremszylinder (3) erst vollständig abgeschlossen wird, bevor mit einem Druckaufbau oder einem Druckabbau an dem zweiten Bremszylinder (4) begonnen wird und umgekehrt.

4. Verfahren nach einem der vorhergehenden Ansprüche, **dadurch gekennzeichnet, dass** die Ventileinrichtung (13) zum Druckaufbau oder zum Druckabbau pulsweitenmoduliert angesteuert wird.

5. Verfahren nach einem der vorhergehenden Ansprüche, **dadurch gekennzeichnet, dass** die Ventileinrichtung (13) gemäß einer Ausgangsstellung in die Druckabbaustellung oder in die Druckaufbaustellung angesteuert wird.

6. Verfahren nach einem der vorhergehenden Ansprüche, **dadurch gekennzeichnet, dass** der Druckaufbau oder der Druckabbau an wenigstens einem der Bremszylinder (3, 4) bedingt durch eine radindividuelle Bremsschlupfregelung (ABS), eine radindividuelle Antriebsschlupfregelung (ASR) oder durch eine radindividuelle Fahrdynamikregelung (ESP) erfolgt.

7. Verfahren nach einem der vorhergehenden Ansprüche, **dadurch gekennzeichnet, dass** die jeweils einer Fahrzeugseite zugeordneten 2/2-Wegeventile (11, 12) durch jeweils ein vom Steuergerät elektrisch gesteuertes 3/2-Wege-Vorsteuer-Magnetventil (15, 16) pneumatisch vorgesteuert wird.

8. Verfahren nach Anspruch 6, **dadurch gekennzeichnet, dass** als 2/2-Wegeventile (11, 12) Membranventile oder Boosterventile verwendet werden.

9. Verfahren nach Anspruch 7 oder 8, **dadurch gekennzeichnet, dass** die 3/2-Wege-Vorsteuer-Magnetventile (15, 16) abhängig von einer Steuerung durch das Steuergerät einerseits einen Vorratsdruck (p11) eines Druckreservoirs oder den fahrerbremswunschabhängigen gebildeten Steuerdruck (p1) an einen Steueranschluss (17, 18) des zugeordneten 2/2-Wegeventils (11, 12) durchsteuern oder andererseits diesen Steueranschluss (17, 18) mit einer Drucksenke (19, 20) verbinden.

10. Verfahren nach einem der vorhergehenden Ansprüche, **dadurch gekennzeichnet, dass** das Steuergerät durch Steuerung wenigstens der Ventileinrichtung (13; 21, 22) und der jeweils einer Fahrzeugseite zugeordneten 2/2-Wegeventile (11, 12) eine radindividuelle Bremsschlupfregelung (ABS) realisiert.

11. Verfahren nach einem der vorhergehenden Ansprüche, **dadurch gekennzeichnet, dass** zur Realisierung einer Antriebsschlupfregelung (ASR) die Ventileinrichtung (13; 21, 22) mit einem einzigen vom Steuergerät elektrisch gesteuerten Magnetventil (24; 26) derart zusammen wirkt, dass der Steueranschluss (8) des Relaisventils (5) abhängig vom Antriebsschlupf der Räder der Achse mit dem fahrerbremswunschabhängig gebildeten Steuerdruck (p1), einem Vorratsdruck (p11) eines Druckreservoirs oder mit einer Drucksenke (14; 23) verbunden wird.

12. Verfahren nach Anspruch 11, **dadurch gekennzeichnet, dass** als das zur Realisierung der Antriebsschlupfregelung (ASR) der Achse vorgesehene einzige zusätzliche Magnetventil ein 3/2-Wege-Magnetventil (24) herangezogen wird.

13. Verfahren nach Anspruch 11, **dadurch gekennzeichnet, dass**
a) ein erstes 2/2-Wege-Magnetventil (21) der die Ventileinrichtung bildenden beiden 2/2-Wege-Magnetventile (21, 22) ein Auslassventil ist, das den Steueranschluss (8) des Relaisventils (5) entweder mit einer Drucksenke (23) gemäß einer Druckabbaustellung verbindet oder diese Verbindung sperrt, und dass
b) ein zweites 2/2-Wege-Magnetventil (22) der die Ventileinrichtung bildenden beiden 2/2-Wege-Magnetventile (21, 22) ein Backup-Ventil ist, dass den Steueranschluss (8) des Relaisventils (5) entweder mit dem fahrerbremswunschabhängig gebildeten Steuerdruck (p1) gemäß einer Druckaufbaustellung verbindet oder diese Verbindung sperrt, und dass
c) das zur Realisierung der Antriebsschlupfregelung (ASR) der Achse vorgesehene einzige zusätzliche Magnetventil ein als 2/2-Wege-Magnetventil (26) ausgebildetes Einlassventil ist.

14. Verfahren nach Anspruch 12 oder 13, **dadurch gekennzeichnet, dass** das Steuergerät durch Steuerung wenigstens des einzigen zusätzlichen Magnetventils (26) eine radindividuelle Antriebsschlupfregelung (ASR) realisiert.

15. Verfahren nach Anspruch 13 oder 14, **dadurch gekennzeichnet, dass** in der Drucksteuervorrichtung (1) zur Ausbildung eines Elektronischen Bremssystems (EBS) mit vorrangigem elektro-pneumatischen Bremskreis und nachrangigem pneumatischem Bremskreis wenigstens ein mit wenigstens einem Arbeitsanschluss (9, 10) des Relaisventils (5) in druckleitender Verbindung stehender Drucksensor (27) vorgesehen wird.

16. Verfahren nach Anspruch 15, **dadurch gekennzeichnet, dass** das Steuergerät durch Steuerung des Einlassventils (26) und des Auslassventils (21) den von dem wenigstens einen Drucksensor (27) gemessenen Ist-Bremsdruck an einen fahrerbremswunschabhängig gebildeten Soll-Bremsdruck anpasst.

17. Verfahren nach Anspruch 15 oder 16, **dadurch gekennzeichnet, dass** zur Ausbildung einer Fahrdynamikregelung (ESP) ein weiterer Drucksensor (28) zur Messung des fahrerbremswunschabhängig gebildeten Steuerdrucks (p1) vorgesehen wird.

18. Verfahren nach einem der Ansprüche 15 bis 17, **dadurch gekennzeichnet, dass** das Steuergerät bei einer durch die Fahrdynamikregelung (ESP) initiierten Bremsung wenigstens die Ventileinrichtung (13; 21, 22) sowie das einzige zusätzliche Magnetventil (24; 26) derart steuert, dass
a) der Steueranschluss (8) des Relaisventils (5) abhängig von der Gierrate des Fahrzeugs durch den Vorratsdruck (p11) des Druckreservoirs beaufschlagt wird,
b) das dem ersten Bremszylinder (3) der ersten Fahrzeugseite zugeordnete 2/2-Wegeventil (11) in Durchlassstellung geschaltet und
c) das dem zweiten Bremszylinder (4) der zweiten Fahrzeugseite zugeordnete 2/2-Wegeventil (12) in Sperrstellung geschaltet wird.

## Claims

1. A method for controlling a pressure control device (1) of a pressure-medium-type brake system of a vehicle for the wheel-specific control of brake pressures in brake cylinders (3, 4) of wheels of an axle, wherein the pressure control device (1) comprises at least the following:
a) a relay valve (5), having a reservoir port (6) which is supplied from a reservoir pressure (p11), having a deaeration port (7) which is connected to a pressure sink, having a control port (8), and having at least two working ports (9, 10), wherein a first working port (9) is assigned to a first brake cylinder (3) of a wheel of a first vehicle side of the axle, and a second working port (10) of the relay valve (5) is assigned to a second brake cylinder (4) of a wheel of a second vehicle side of the axle,
b) 2/2 directional valves (11, 12) which are directly or indirectly controlled by a control unit and which are assigned to in each case one vehicle side and which are each connected to one working port (9, 10) of the relay valve (5) and which, in a manner dependent on the actuation by the control unit, either produce, in a pass-through position, a connection between the respective working port (9, 10) of the relay valve and the associated brake cylinder (3, 4), or block, in a blocking position, said connection, and
c) a valve device which is formed by a 3/2 directional solenoid valve (13) or by two 2/2 directional solenoid valves (21, 22) and which is controlled by way of the control unit and which connects, in a pressure build-up position, the control port (8) of the relay valve (5) to a brake control pressure (p1) formed dependently on a driver braking demand, or connects, in a pressure dissipation position, said control port of the relay valve to a pressure sink (14; 23), **characterized in that**,
d) for a pressure dissipation at at least one brake cylinder (3, 4), the valve device (13; 21, 22) is switched into the pressure dissipation position, and the 2/2 directional valve (11, 12) assigned to the respective brake cylinder (3, 4) is switched into or remains in a blocking position for as long as the working pressure (p21, p22) at the working port (9, 10), assigned to the at least one brake cylinder (3, 4), of the relay valve (5) remains higher than or equal to the pressure (p3, p4) in the respective brake cylinder (3, 4), and the 2/2 directional valve (11, 12) assigned to the respective brake cylinder (3, 4) is switched into the pass-through position only when the working pressure (p21, p22) at the respective working port (9, 10) of the relay valve (5) is lower than the pressure (p3, p4) in the respective brake cylinder (3, 4), and **in that**,
e) for a pressure build-up at at least one brake cylinder (3, 4), the valve device (13; 21, 22) is switched into the pressure build-up position, and the 2/2 directional valve (11, 12) assigned to the respective brake cylinder (3, 4) is switched into or remains in a blocking position for as long as the working pressure (p21, p22) at the working port (9, 10), assigned to the at least one brake cylinder (3, 4), of the relay valve (5) remains lower than or equal to the pressure (p3, p4) in the respective brake cylinder (3, 4), and the 2/2 directional valve (11, 12) assigned to the respective brake cylinder (3, 4) is switched into the pass-through position only when the working pressure (p21, p22) at the respective working port (9, 10) of the relay valve (5) is higher than the pressure (p3, p4) in the respective brake cylinder (3, 4).

2. The method as claimed in claim 1, **characterized in that** the pressure (p3, p4) in the at least one brake cylinder (3, 4) and/or the working pressure (p21, p22) at the working ports (9, 10) of the relay valve (5) are measured by way of a pressure sensor or estimated by way of an estimation algorithm.

3. The method as claimed in claim 1 or 2, **characterized in that** a pressure build-up or a pressure dissipation at the first brake cylinder (3) is firstly fully completed before a pressure build-up or a pressure dissipation at the second brake cylinder (4) is commenced, and vice versa.

4. The method as claimed in one of the preceding claims, **characterized in that** the valve device (13) is actuated in pulse-width-modulated fashion for the pressure build-up or pressure dissipation.

5. The method as claimed in one of the preceding claims, **characterized in that** the valve device (13) is, in a basic position, actuated into the pressure dissipation position or into the pressure build-up position.

6. The method as claimed in one of the preceding claims, **characterized in that** the pressure build-up or the pressure dissipation at at least one of the brake cylinders (3, 4) is performed in a manner commanded by a wheel-specific brake slip regulation (ABS) arrangement, a wheel-specific drive slip regulation (ASR) arrangement or a wheel-specific driving dynamics regulation (ESP) arrangement.

7. The method as claimed in one of the preceding claims, **characterized in that** the 2/2 directional valves (11, 12) assigned to in each case one vehicle side are pneumatically pilot-controlled by way of in each case one 3/2 directional pilot control solenoid valve (15, 16) which is electrically controlled by the control unit.

8. The method as claimed in claim 6, **characterized in that** diaphragm valves or booster valves are used as 2/2 directional valves (11, 12).

9. The method as claimed in claim 7 or 8, **characterized in that**, in a manner dependent on control by the control unit, the 3/2 directional pilot control solenoid valves (15, 16), on the one hand, pass through a reservoir pressure (p11) of a pressure reservoir, or the control pressure (p1) formed dependently on a driver braking demand, to a control port (17, 18) of the associated 2/2 directional valve (11, 12), or, on the other hand, connect said control port (17, 18) to a pressure sink (19, 20).

10. The method as claimed in one of the preceding claims, **characterized in that** the control unit realizes wheel-specific brake slip regulation (ABS) by way of control at least of the valve device (13; 21, 22) and of the 2/2 directional valves (11, 12) assigned in each case to one vehicle side.

11. The method as claimed in one of the preceding claims, **characterized in that**, to realize drive slip regulation (ASR), the valve device (13; 21, 22) interacts with a single solenoid valve (24; 26), which is electrically controlled by the control unit, in such a way that, in a manner dependent on the drive slip of the wheels of the axle, the control port (8) of the relay valve (5) is connected to the control pressure (p1) formed dependently on a driver braking demand, to a reservoir pressure (p11) of a pressure reservoir, or to a pressure sink (14; 23).

12. The method as claimed in claim 11, **characterized in that**, as the single additional solenoid valve provided for the realization of the drive slip regulation (ASR) of the axle, a 3/2 directional solenoid valve (24) is used.

13. The method as claimed in claim 11, **characterized in that**
a) a first 2/2 directional solenoid valve (21) of the two 2/2 directional solenoid valves (21, 22) which form the valve device is an outlet valve which either connects, in a pressure dissipation position, the control port (8) of the relay valve (5) to a pressure sink (23) or blocks said connection, and **in that**
b) a second 2/2 directional solenoid valve (22) of the two 2/2 directional solenoid valves (21, 22) which form the valve device is a backup valve which either connects, in a pressure build-up position, the control port (8) of the relay valve (5) to the control pressure (p1) formed dependently on a driver braking demand, or blocks said connection, and **in that**
c) the single additional solenoid valve provided for the realization of the drive slip regulation (ASR) of the axle is an inlet valve in the form of a 2/2 directional solenoid valve (26).

14. The method as claimed in claim 12 or 13, **characterized in that** the control unit realizes wheel-specific drive slip regulation (ASR) by way of control of at least the single additional solenoid valve (26).

15. The method as claimed in claim 13 or 14, **characterized in that**, in the pressure control device (1), to form an electronic brake system (EBS) with primary electropneumatic brake circuit and secondary pneumatic brake circuit, there is provided at least one pressure sensor (27) which is connected in pressure-conducting fashion to at least one working port (9, 10) of the relay valve (5) .

16. The method as claimed in claim 15, **characterized in that** the control unit adapts, by way of control of the inlet valve (26) and of the outlet valve (21), the actual brake pressure measured by the at least one pressure sensor (27) to a setpoint brake pressure formed dependently on a driver braking demand.

17. The method as claimed in claim 15 or 16, **characterized in that**, to form a driving dynamics regulation (ESP) arrangement, a further pressure sensor (28) is provided for measuring the control pressure (p1) formed dependently on a driver braking demand.

18. The method as claimed in one of claims 15 to 17, **characterized in that**, in the event of a braking operation initiated by the driving dynamics regulation (ESP) arrangement, the control unit controls at least the valve device (13; 21, 22) and the single additional solenoid valve (24; 26) such that
a) the control port (8) of the relay valve (5) is, in a manner dependent on the yaw rate of the vehicle, charged with the reservoir pressure (p11) of the pressure reservoir,
b) the 2/2 directional valve (11) assigned to the first brake cylinder (3) of the first vehicle side is switched into the pass-through position, and
c) the 2/2 directional valve (12) assigned to the second brake cylinder (4) of the second vehicle side is switched into the blocking position.

## Revendications

1. Procédé de commande d'un dispositif (1) de commande de pression d'un système de freinage à fluide sous pression d'un véhicule pour la commande, individuelle à une roue, de pressions de freinage dans des cylindres (3, 4) de frein de roues d'un essieu, le dispositif (1) de commande de pression comportant au moins ce qui suit :
a) une vanne (5) relais ayant un raccord (6) de réserve, auquel s'applique une pression (p11) de réserve, un raccord (7) de purge en liaison avec un puits de pression, un raccord (8) de commande et au moins deux raccords (9, 10) de travail, un premier raccord (9) de travail étant associé à un premier cylindre (3) de frein d'une roue d'un premier côté de véhicule de l'essieu et un deuxième raccord (10) de travail de la vanne (5) relais à un deuxième cylindre (4) de frein d'une roue d'un deuxième côté de véhicule de l'essieu,
b) des vannes (11, 12) à 2/2 voies, qui sont commandées directement ou indirectement par un appareil de commande, qui sont associées chacune à un côté de véhicule, qui sont reliées chacune à un raccord (9, 10) de travail de la vanne (5) relais et qui, en fonction de la commande par l'appareil de commande, ou bien établissent une liaison entre le raccord (9, 10) de travail concerné de la vanne relais et le cylindre (3, 4) de frein associé selon une position de passage, ou interrompent cette liaison suivant une position d'interruption et
c) un dispositif de vanne, qui est formé par une électrovanne (13) à 3/2 voies ou par deux électrovannes (21, 22) à 2/2 voies, qui est commandé au moyen de l'appareil de commande et qui relie le raccord (8) de commande de la vanne (5) relais, suivant une position d'établissement de pression, à une pression (p1) de commande de frein formée en fonction du souhait de freinage du conducteur ou, suivant une position de suppression de la pression, à un puits (14; 23) de pression, **caractérisée en ce que**
d) pour une suppression de la pression sur au moins un cylindre (3, 4) de frein, le dispositif (13; 21, 22) de vanne est mis dans la position de suppression de la pression et, tant que la pression (p21, p22) de travail sur le raccord (9, 10) de travail, associé au au moins un cylindre (3; 4) de frein de la vanne (5) relais, est encore plus grande que la pression (p3, p4) dans le cylindre (3, 4) de frein concerné ou est égale à celle-ci, la vanne (11, 12) à 2/2 voies, associée au cylindre (3, 4) de frein concerné, est mise en la position d'interruption ou y reste et, seulement lorsque la pression (p21, p22) de travail au raccord (9, 10) de travail concerné de la vanne (5) relais est plus petite que la pression (p3, p4) dans le cylindre (3, 4) de frein concerné, la vanne (11, 12) à 2/2 voies, associée au cylindre (3, 4) de frein concerné, est mise dans la position de passage et **en ce que**
e) pour un établissement de la pression sur au moins un cylindre (3, 4) de frein, le dispositif (13; 21, 22) de vanne est mis dans la position d'établissement de la pression et, tant que la pression (p21, p22) de travail sur le raccord (9, 10) de travail, associé au au moins un cylindre (3, 4) de frein de la vanne (5) relais, est encore plus petite que la pression (t3, t4) dans le cylindre (3, 4) de frein concerné ou est égale à celle-ci, la vanne (11, 12) à 2/2 voies, associée au cylindre (3, 4) de frein concerné, est mise dans la position d'interruption ou y reste et, seulement lorsque la pression (p21, p22) de travail sur le raccord (9, 10) de travail concerné de la vanne (5) relais est plus grande que la pression (p3, p4) dans le cylindre (3, 4) de frein concerné, la vanne (11, 12) à 2/2 voies, associée au cylindre (3, 4) de frein concerné, est mise dans la position de passage.

2. Procédé suivant la revendication 1, **caractérisé en ce que** la pression (p3, p4), dans le au moins un cylindre (3, 4) de frein et/ou la pression (p21, p22) de travail sur les raccords (9, 10) de travail de la vanne (5) relais, est mesurée au moyen d'un capteur de pression ou est estimée au moyen d'un algorithme d'estimation.

3. Procédé suivant la revendication 1 ou 2, **caractérisé en ce qu'**un établissement de la pression ou une suppression de la pression dans le premier cylindre (3) de frein est terminé complètement avant de commencer ou d'inverser un établissement de la pression ou une suppression de la pression sur le deuxième cylindre (4) de frein.

4. Procédé suivant l'une des revendications précédentes, **caractérisé en ce que** le dispositif (13) de vanne est commandé d'une manière modulaire en largeur d'impulsion pour l'établissement de la pression ou pour la suppression de la pression.

5. Procédé suivant l'une des revendications précédentes, **caractérisé en ce que** le dispositif (13) de vanne est mis, suivant une position de départ, dans la position de suppression de la pression ou dans la position d'établissement de la pression.

6. Procédé suivant l'une des revendications précédentes, **caractérisé en ce que** l'établissement de la pression ou la suppression de la pression sur au moins l'un des cylindres (3, 4) de frein s'effectue en raison d'une régulation de glissement de freinage (ABS) individuelle à une roue, d'une régulation de glissement d'entraînement (ASR) individuelle à une roue ou d'une régulation de dynamique de marche (ESP) individuelle à une roue.

7. Procédé suivant l'une des revendications précédentes, **caractérisé en ce que** la vanne (11, 12) à 2/2 voies, associée respectivement à un côté de véhicule, est pilotée pneumatiquement par, respectivement, une électrovanne (15, 16) de pilotage à 3/2 voies commandée électriquement par l'appareil de commande.

8. Procédé suivant la revendication 6, **caractérisé en ce que** l'on utilise, comme vanne (11, 12) à 2 voies, des vannes en membrane ou des vannes booster.

9. Procédé suivant la revendication 7 ou 8, **caractérisé en ce que** les électrovannes (15, 16) à 3/2 voies relient, en fonction d'une commande par l'appareil de commande, d'une part une pression (p11) de réserve d'un réservoir de pression ou la pression (p1) de commande formée en fonction du souhait de freinage du conducteur à un raccord (17, 18) de commande de la vanne (11, 12) à 2/2 voies associé ou, d'autre part ce raccord (17, 18) de commande à un puits (19, 20) de pression.

10. Procédé suivant l'une des revendications précédentes, **caractérisé en ce que** l'appareil de commande réalise, par commande d'au moins le dispositif (13; 21, 22) de vanne et des vannes (11, 12) à 2/2 voies associées respectivement à un côté de véhicule, une régulation de glissement de freinage (ABS) individuelle à une roue.

11. Procédé suivant l'une des revendications précédentes, **caractérisé en ce que**, pour réaliser une régulation de glissement d'entraînement (ASR), le dispositif (13; 21, 22) de vanne coopère avec une électrovanne (24; 26) individuelle, commandée électriquement par l'appareil de commande, de manière à ce que le raccord (8) de commande de la vanne (5) relais soit, en fonction du glissement d'entraînement des roues de l'essieu, relié à la pression (p1) de commande, formée en fonction du souhait de freinage du conducteur, à une pression (p11) de réserve d'un réservoir de pression ou à un puits (14; 23) de pression.

12. Procédé suivant la revendication 11, **caractérisé en ce que** l'on tire parti d'une électrovanne (24) à 3/2 voies, comme électrovanne supplémentaire unique prévue pour réaliser la régulation de glissement d'entraînement (ASR) de l'essieu.

13. Procédé suivant la revendication 11, **caractérisé en ce que**
a) une première électrovanne (21) à 2/2 voies des deux électrovannes (21, 22) à 2/2 voies formant le dispositif de vanne est une vanne de sortie, qui relie le raccord (8) de commande de la vanne (5) relais, soit à un puits (23) de pression, suivant une position de suppression de la pression, ou interrompt cette liaison et **en ce que**
b) une deuxième électrovanne (22) à 2/2 voies des deux électrovannes (21, 22) à 2/2 voies formant le dispositif de vanne est une vanne de backup, qui relie le raccord (8) de commande de la vanne (5) relais, soit à la pression (p1) de commande formée en fonction du souhait de freinage du conducteur, suivant une position d'établissement de la pression, soit interrompt cette liaison et **en ce que**
c) l'électrovanne supplémentaire unique, prévue pour réaliser la régulation de glissement d'entraînement (ASR) de l'essieu, est une vanne d'entrée constituée en électrovanne (26) à 2/2 voies.

14. Procédé suivant la revendication 12 ou 13, **caractérisé en ce que** l'appareil de commande réalise, par commande d'au moins l'électrovanne (26) supplémentaire unique, une régulation de glissement d'entraînement (ASR) individuelle à une roue.

15. Procédé suivant la revendication 13 ou 14, **caractérisé en ce que**, dans le dispositif (1) de commande de pression, pour la constitution d'un système de freinage électronique (EBS), ayant un circuit de frein électropneumatique prioritaire et un circuit de frein pneumatique subordonné, il est prévu au moins un capteur (27) de pression en liaison d'une manière conduisant la pression avec au moins un raccord (9, 10) de travail de la vanne (5) relais.

16. Procédé suivant la revendication 15, **caractérisé en ce que** l'appareil de commande, par commande de la vanne (26) d'entrée et de la vanne (21) de sortie, adapte la pression de freinage réelle mesurée par le au moins un capteur (27) de pression à une pression de freinage de consigne formée en fonction du souhait de freinage du conducteur.

17. Procédé suivant la revendication 15 ou 16, **caractérisé en ce que**, pour former une régulation (ESP) dynamique de marche, il est prévu un autre capteur (28) de pression pour mesurer la pression (p1) de commande formée en fonction du souhait de freinage du conducteur.

18. Procédé suivant l'une des revendications 15 à 17, **caractérisé en ce que** l'appareil de commande commande, lors d'un freinage lancé par la régulation de dynamique de marche (ESP), au moins le dispositif (13; 21, 22) de vanne, ainsi que l'électrovanne (24, 26) supplémentaire unique, de manière à ce que
a) le raccord (8) de commande de la vanne (5) relais soit, en fonction du taux d'embardées du véhicule, alimenté par la pression (p11) de réserve du réservoir de pression,
b) la vanne (11) à 2/2 voies, associée au premier cylindre (3) de frein du premier côté de véhicule, soit mise en la position de passage et
c) la vanne (12) à 2/2 voies, associée au deuxième cylindre (4) du frein du deuxième côté du véhicule, soit mise en la position d'interruption. !
